# EUROPEAN PATENT SPECIFICATION

(11) **EP 3 468 258 B1**
(45) Date of publication and mention of the grant of the patent: **22.09.2021**
(21) Application number: 16906779.0
(22) Date of filing: 30.06.2016
(51) Int. Cl.: H04W 48/18

(54) **DATA TRANSMISSION CONTROL METHOD AND DEVICE**
VERFAHREN ZUR DATENÜBERTRAGUNGSSTEUERUNG UND VORRICHTUNG
PROCÉDÉ DE COMMANDE DE TRANSMISSION DE DONNÉES ET DISPOSITIF

(43) Date of publication of application: 10.04.2019
(73) Proprietor: Huawei Technologies Co., Ltd., Longgang District Shenzhen, Guangdong 518129 (CN)
(72) Inventor: DUAN, Xiaoyan, Shenzhen Guangdong 518129 (CN); JIN, Hui, Shenzhen Guangdong 518129 (CN)
(74) Representative: Thun, Clemens
(86) International application number: PCT/CN2016/088010
(87) International publication number: WO 2018/000379

(56) References cited:
- WO-A1-2014/161172
- WO-A1-2014/161487
- CN-A- 101 128 040
- CN-A- 102 638 852
- CN-A- 103 167 562
- US-A1- 2013 322 300
- US-A1- 2016 072 823

## Description

### TECHNICAL FIELD

The present invention relates to the communications field, and in particular, to a data transmission control method performed by an access network device and an access network device.

### BACKGROUND

A 5th generation (the 5th Generation, 5G) mobile communications system needs to be capable of supporting a terminal in accessing a 5G core network by using a 5G access network, eLTE (evolved Long Term Evolution), an access network, and a non-3GPP access network (for example, a WLAN). In addition, the system further needs to control quality of service (Quality of Service, QoS).

An existing QoS (Quality of Service, quality of service) control procedure includes: A terminal first sets up a session with an AN (Access Network, access network). An AF (Application Function, application function) sends an AF QoS request to a CP Function (Control Plane Functions, control plane function, CP for short). The CP receives the QoS request, determines a QoS policy based on a requirement of an operator, and sends the QoS policy to a UP Function (User Plane Functions, user plane function, UP for short), the AN, and the terminal. The AN and the terminal may perform QoS management on data transmission between the terminal and the AN based on the received QoS policy.

The access network may include a plurality of types, for example, a 5G access network, an eLTE access network, and a non-3GPP access network (for example, a WLAN). In the foregoing procedure, different types of access networks have different capabilities in supporting QoS, and if an access network used in a session cannot satisfy a requirement of the QoS policy, poor service experience of a terminal user is caused.

US 2013/0322300 A1 refers to a method for the control of access network/access technology selection for the routing of IP traffic by a User Equipment UE in a multi-access communication system, based on operator's policies, is provided, wherein: -said operator's policies include Quality of Service QoS-based policies, based on IP traffic matching specific QoS filters.

WO 2014/161172 A1 refers to a switching method, a base station and a terminal. The method comprises: a base station indicating a terminal to enable an access network discovery and selection function (ANDSF), which is used for the terminal to acquire access network information through the ANDSF, wherein the access network information comprises candidate target access network information; the base station receiving the candidate target access network information sent by the terminal; and the base station determining a target access network according to the candidate target access network information, and switching the terminal to the target access network.

### SUMMARY

Embodiments of the present invention provide a data transmission control method performed by a network access device and an access network device. According to a determined QoS policy, an access network supporting the QoS policy is selected to be assessed, so that a QoS requirement of transmission of a data flow corresponding to a particular service is satisfied, and service experience of a terminal user is improved.

This problem is solved by the subject matter of the independent claims. Further implemenation forms are provided in the dependent claims.

The following embodiments are for illustrative purpose only and they do not fall within the scope of the claims.

According to a first aspect, this application provides a data transmission control method. The method includes the following steps:
A communications device receives a QoS request sent by a core network device, where the QoS request carries a first QoS policy (including a first-type data flow template and a first-type QoS parameter that correspond to a first data flow). The communications device may obtain the first QoS policy from the QoS request and further determine, with reference to the first-type QoS parameter and information about a candidate access network, whether there is an access network that is in the candidate access network (including an access network that has been currently accessed by a terminal and an access network accessible to the terminal) and that supports the first-type QoS parameter, that is, an access network supporting the first QoS policy. If any, it is determined that the access network supporting the first QoS policy is a target access network, and subsequently, the first data flow is transmitted by using the determined target access network. Herein, the target access network may be a specified access network, or may be a type of access networks, for example, a WLAN. Subsequently, the communications device needs to convert the first-type QoS parameter into a second-type QoS parameter matching the target access network, and simultaneously convert the first-type data flow template into a second-type data flow template matching the target access network. Finally, the communications device may control transmission of the first data flow based on the second-type QoS parameter and the second-type data flow template that are determined in the foregoing steps.

Specifically, the first-type data flow template is a data flow template based on L3 or L4 in a 7-layer network model, and the first-type QoS parameter is a QoS parameter based on L3 or L4 in the 7-layer network model. The second-type data flow template herein is a data flow template based on L2 or L1 in the 7-layer network model, and the second-type QoS parameter is a QoS parameter based on L2 or L1 in the 7-layer network model. For example, if the target access network determined in the previous step is a WLAN access network, the first-type QoS parameter is converted into a QoS parameter corresponding to the WLAN network, and the first-type data flow template is converted into a data flow template corresponding to the WLAN.

Currently, the access network accessible to the terminal may include a plurality of types, for example, a 5G access network, an eLTE access network, and a non-3GPP access network (for example, a WLAN). In the prior art, after the terminal sets up a session with a network side, a CP determines a QoS policy based on a requirement of an operator and the like, and the terminal and the access network may control data transmission based on the QoS policy. Different types of access networks have different capabilities in supporting QoS, and if an access network used in a session cannot satisfy a requirement of the QoS policy, poor service experience of a terminal user is caused.

However, according to the method provided in this application, the QoS policy is determined after the terminal accesses a wireless network. The target access network satisfying the QoS policy is selected based on the determined QoS policy, and the QoS policy is converted into a QoS parameter and a data flow template that match the target access network. Finally, data transmission is controlled based on the QoS parameter and the data flow template that match the target access network. In this way, an access network is determined based on the QoS policy while QoS is controlled, and a QoS requirement of transmission of a data flow corresponding to a particular service is satisfied, thereby improving service experience of the terminal.

With reference to the first aspect, in a first possible implementation of the first aspect, the information about the candidate access network includes at least one of the following: information about an access network that has been currently accessed by the terminal, information about an access network that is currently accessible to the terminal, a type of an access network supported by the terminal, preconfigured access network selection policy information, and load information of an access network that is currently accessible to the terminal.

In this way, the communications device may select an access network supporting the first QoS policy. The access network used by the terminal for performing a session can satisfy the first QoS policy, and the service experience of the terminal can also be improved.

With reference to the first aspect or the first possible implementation of the first aspect, in a second possible implementation of the first aspect, the determining, by the communications device based on the first-type QoS parameter, a second-type QoS parameter matching the target access network specifically includes:
converting a service priority included in the first-type QoS parameter into a service priority matching the target access network, and converting service description information included in the first-type QoS parameter into service description information matching the target access network, where the second-type QoS parameter includes at least the service priority matching the target access network and the service description information matching the target access network.

In the present invention, the first-type QoS parameter based on L3 or L4 is converted into the service priority and the service description information based on L2 or L1, so that the communications device can transmit data by using the target access network. Certainly, the first-type QoS parameter may not only include the service priority and the service description information, but also include other QoS parameter information. Certainly, herein, all QoS parameter information included in the first-type QoS parameter needs to be converted into QoS parameter information based on L2 or L1.

With reference to the first aspect or the first possible implementation of the first aspect, in a third possible implementation of the first aspect, the generating, by the communications device based on the first-type data flow template, a second-type data flow template matching the target access network specifically includes:
determining, based on a first-type address parameter and/or a first-type data flow identity that are/is included in the first-type data flow template, a second-type address parameter matching the target access network and/or a second-type data flow identity matching the target access network, where the first-type data flow template is a data flow template based on a layer 3 protocol and/or a layer 4 protocol; and
the second-type data flow template includes at least the second-type address parameter and/or the second-type data flow identity; and the second-type data flow template is a data flow template based on a layer 2 protocol and/or a layer 1 protocol.

It should be noted that the first-type address parameter includes at least a first-type data flow source address and/or a first-type data flow destination address, and the second-type address parameter includes at least a second data flow source address and/or a second-type data flow destination address. Both the first-type data flow source address and the first-type data flow destination address are address parameters based on the layer 3 protocol and/or the layer 4 protocol. Both the second-type data flow source address and the second-type data flow destination address are address parameters based on the layer 2 protocol and/or the layer 1 protocol.

With reference to any one of the first aspect or the first to the third possible implementations of the first aspect, in a fourth possible implementation of the first aspect, after the determining, by the communications device, an access network that is in the candidate access network and that supports the first QoS policy as a target access network, the method further includes:
generating an association table, where the association table records a correspondence between the first data flow and the target access network.

With reference to the first aspect or the first possible implementation of the first aspect, in a fifth possible implementation of the first aspect, if the communications device is an access network device, the controlling, by the communications device, transmission of the first data flow based on the second-type QoS parameter and the second-type data flow template specifically includes:
sending, by the access network device, the second-type QoS parameter, the second-type data flow template, and information about the target access network to the terminal, where the information about the access network may be identity information of an access network or type information of a type of access networks, so that the terminal can control transmission of the first data flow based on the second-type QoS parameter and the second-type data flow template; and/or
sending, by the access network device, the second-type QoS parameter and the second-type data flow template to an access node of the target access network, so that the access node of the target access network controls transmission of the first data flow based on the second-type QoS parameter and the second-type data flow template.

With reference to the fifth possible implementation of the first aspect, in a sixth possible implementation of the first aspect, if there is no access network that is in the candidate access network and that supports the first QoS policy, the method further includes:
sending, by the access network device, a QoS request failure indication to the core network device, where the core network device may modify the first QoS policy to a second QoS policy after receiving the QoS request failure indication;
receiving, by the access network device, a QoS update request sent by the core network device, and obtaining the second QoS policy from the QoS update request; and
re-determining, by the access network device based on the second QoS policy and the information about the candidate access network, a target access network, that is, determining an access network that is in the candidate access network and that supports the second QoS policy as an updated target access network; and further generating a third-type QoS parameter and a third-type data flow template that match the updated target access network; and
finally sending, by the access network device, the third-type QoS parameter and the third-type data flow template to the terminal, and sending the third-type QoS parameter and the third-type data flow template to an access node of the updated target access network, so that the terminal and the access node of the updated target access network may control transmission of the first data flow based on the third-type QoS parameter and the third-type data flow template.

In this way, the first QoS policy may be modified in time based on the information about the candidate access network, and the QoS policy is adjusted, so that in the candidate access network, there is an access network that supports the QoS policy determined by the core network device, and data transmission can be controlled based on the QoS policy. Different QoS policies correspond to different service requirements. Therefore, according to the present invention, a QoS requirement of transmission of a data flow corresponding to a particular service can be satisfied, and the service experience of the terminal can be improved.

With reference to the first aspect or the first possible implementation of the first aspect, in a seventh possible implementation of the first aspect, if the communications device is the terminal, the controlling, by the communications device, transmission of the first data flow based on the second-type QoS parameter and the second-type data flow template specifically includes:
establishing, by the terminal, a data flow transmission connection to an access node of the target access network, and transmitting the first data flow by using the data flow transmission connection based on the second-type QoS parameter and the second-type data flow template.

With reference to the seventh possible implementation of the first aspect, in an eighth possible implementation of the first aspect, the establishing, by the communications device, a data flow transmission connection to an access node of the target access network specifically includes:
sending, by the terminal, the second-type QoS parameter, the second-type data flow template, and information about the target access network to an access network device, and establishing the data flow transmission connection to the access node of the target access network under control of the access network device. Specifically, the access network device may determine the target access network based on the information about the access network, and send the second-type QoS parameter and the second-type data flow template to the access node of the target access network. The access node of the target access network establishes the data flow transmission connection to the terminal.

Alternatively, after determining the target access network, the terminal determines the access node of the target access network, directly sends the second-type QoS parameter and the second-type data flow template to the access node of the target access network, and establishes the data flow transmission connection to the access node of the target access network.

With reference to the seventh possible implementation of the first aspect, in a ninth possible implementation of the first aspect, after the controlling, by the communications device, transmission of the first data flow based on the second-type QoS parameter and the second-type data flow template, the method further includes:
obtaining, by the communications device, a third QoS policy corresponding to a second data flow, where the third QoS policy is based on a layer 3 protocol and/or a layer 4 protocol;
determining an access network that is in the candidate access network and that supports the third QoS policy as a target access network used during transmission of the second data flow;
converting a first-type QoS parameter included in the third QoS policy into a second-type QoS parameter matching the target access network used during transmission of the second data flow, and converting a first-type data flow included in the third QoS policy into a second-type data flow template matching the target access network used during transmission of the second data flow; and
transmitting the second data flow based on the second-type QoS parameter and the second-type data flow template that are obtained through conversion.

It may be learned that the terminal in this embodiment of the present invention may simultaneously access different access networks, and transmit data by using different access networks based on different QoS parameters and data flow templates.

According to a second aspect, an embodiment of the present invention provides a data transmission control method. The method includes the following steps:
A core network device determines a first QoS policy of a first data flow. The first QoS policy includes a first-type data flow template and a first-type QoS parameter that correspond to the first data flow. The first-type data flow template is a data flow template based on L3 or L4 in a 7-layer network model, and the first-type QoS parameter is a QoS parameter based on L3 or L4 in the 7-layer network model.

The core network device determines, based on the first-type QoS parameter and information about a candidate access network (including an access network that has been currently accessed by a terminal and an access network accessible to the terminal), whether there is an access network that is in the candidate access network and that supports the first-type QoS parameter, that is, an access network supporting the first QoS policy, and determines the access network that is in the candidate access network and that supports the first QoS policy as a target access network. Similarly, the target access network may be a specified access network, or may be a type of access networks, for example, a WLAN.

The core network device sends the first-type data flow template, the first-type QoS parameter, and information about the target access network to an access network device, so that the access network device may determine a second-type data flow template and a second-type QoS parameter that match the target access network, and control data transmission based on the second-type data flow template and the second-type QoS parameter.

Currently, the access network accessible to the terminal may include a plurality of types, for example, a 5G access network, an eLTE access network, and a non-3GPP access network (for example, a WLAN). In the prior art, after the terminal sets up a session with a network side, a CP determines a QoS policy based on a requirement of an operator and the like, and the terminal and the access network may control data transmission based on the QoS policy. Different types of access networks have different capabilities in supporting QoS, and if an access network used in a session cannot satisfy a requirement of the QoS policy, poor service experience of a terminal user is caused.

However, according to the method provided in this application, the QoS policy is determined after the terminal accesses a wireless network. The target access network satisfying the QoS policy is selected based on the determined QoS policy, and the QoS policy is converted into a QoS parameter and a data flow template that match the target access network. Finally, data transmission is controlled based on the QoS parameter and the data flow template that match the target access network. In this way, a QoS requirement of transmission of a data flow corresponding to a particular service can be satisfied while QoS is controlled, thereby improving service experience of the terminal.

With reference to the second aspect, in a first possible implementation of the second aspect, the second-type QoS parameter includes at least a service priority matching the target access network and service description information matching the target access network; the second-type data flow template includes at least the second-type address parameter and/or the second-type data flow identity; the first-type data flow template is a data flow template based on a layer 3 protocol and/or a layer 4 protocol; and the second-type data flow template is a data flow template based on a layer 2 protocol and/or a layer 1 protocol.

With reference to the second aspect or the first possible implementation of the second aspect, if there is no access network that is in the candidate access network and that supports the first QoS policy, the method further includes:
determining, by the core network device, whether a service corresponding to the first data flow is a service whose QoS requirement is allowed to be lowered;
if the service corresponding to the first data flow is a service whose QoS requirement is allowed to be lowered, determining a second QoS policy, including the first-type data flow template and an updated second-type QoS parameter;
determining an access network that is in the candidate access network and that supports the second QoS policy as an updated target access network; and
sending, by the core network device, the first-type data flow template, the updated first-type QoS parameter, and information about the updated target access network to the access network device, so that the access network device determines a third-type data flow template and a third-type QoS parameter that match the updated target access network, and controls data transmission based on the third-type data flow template and the third-type QoS parameter.

According to a third aspect, a communications device is disclosed. The communications device includes:
a receiving unit, configured to: receive a QoS request sent by the core network device, and obtain the first QoS policy from the QoS request, where the QoS request carries the first QoS policy, and the first QoS policy includes a first-type data flow template and a first-type QoS parameter that correspond to a first data flow;
a determining unit, configured to determine, based on the first-type QoS parameter and information about a candidate access network, an access network that is in the candidate access network and that supports the first QoS policy as a target access network, where the target access network is an access network used during transmission of the first data flow;
a generation unit, configured to generate, based on the first-type QoS parameter, a second-type QoS parameter matching the target access network, and generate, based on the first-type data flow template, a second-type data flow template matching the target access network; and
a transmission control unit, configured to control transmission of the first data flow based on the second-type QoS parameter and the second-type data flow template.

The information about the candidate access network includes at least one of the following:
information about an access network that has been currently accessed by a terminal, information about an access network that is currently accessible to the terminal, a type of an access network supported by the terminal, preconfigured access network selection policy information, and load information of a currently accessible access network.

With reference to the third aspect, in a first possible implementation of the third aspect,
the determining unit is specifically configured to: convert a service priority included in the first-type QoS parameter into a service priority matching the target access network, and convert service description information included in the first-type QoS parameter into service description information matching the target access network; and
the second-type QoS parameter includes at least the service priority matching the target access network and the service description information matching the target access network.

With reference to the third aspect, in a second possible implementation of the third aspect,
the generation unit is specifically configured to determine, based on a first-type address parameter and/or a first-type data flow identity that are/is included in the first-type data flow template, a second-type address parameter matching the target access network and/or a second-type data flow identity matching the target access network, where the first-type data flow template is a data flow template based on a layer 3 protocol and/or a layer 4 protocol; and
the second-type data flow template includes at least the second-type address parameter and/or the second-type data flow identity; and the second-type data flow template is a data flow template based on a layer 2 protocol and/or a layer 1 protocol.

With reference to the second possible implementation of the third aspect, in a third possible implementation of the third aspect, the first-type address parameter includes at least a first-type data flow source address and/or a first-type data flow destination address, and the second-type address parameter includes at least a second data flow source address and/or a second-type data flow destination address. Both the first-type data flow source address and the first-type data flow destination address are address parameters based on the layer 3 protocol and/or the layer 4 protocol. Both the second-type data flow source address and the second-type data flow destination address are address parameters based on the layer 2 protocol and/or the layer 1 protocol.

With reference to the third aspect or the first to the third possible implementations of the third aspect, in a fourth possible implementation of the third aspect, the generation unit is further configured to: after the determining unit determines an access network that is in the candidate access network and that supports the first QoS policy as a target access network, generate an association table, where the association table records a correspondence between the first data flow and the target access network.

With reference to the third aspect, in a fifth possible implementation of the third aspect, if the communications device is an access network device, the transmission control unit is configured to: send the second-type QoS parameter, the second-type data flow template, and information about the target access network to the terminal, so that the terminal controls transmission of the first data flow based on the second-type QoS parameter and the second-type data flow template; and/or
send the second-type QoS parameter and the second-type data flow template to an access node of the target access network, so that the access node of the target access network controls transmission of the first data flow based on the second-type QoS parameter and the second-type data flow template.

With reference to the fifth possible implementation of the third aspect, in a sixth possible implementation of the third aspect, the communications device further includes a sending unit, and if there is no access network that is in the candidate access network and that supports the first QoS policy,
the sending unit is configured to send a QoS request failure indication to the core network device;
the receiving unit is configured to receive a QoS update request sent by the core network device, where the QoS update request carries a second QoS policy;
the determining unit is configured to determine, based on the second QoS policy and the information about the candidate access network, an access network that is in the candidate access network and that supports the second QoS policy as an updated target access network;
the generation unit is configured to generate a third-type QoS parameter and a third-type data flow template, where the third-type QoS parameter and the third-type data flow template match the updated target access network; and
the sending unit is further configured to send the third-type QoS parameter and the third-type data flow template to the terminal, and send the third-type QoS parameter and the third-type data flow template to an access node of the updated target access network, so that the terminal and the access node of the updated target access network control transmission of the first data flow.

With reference to the third aspect, in a seventh possible implementation of the third aspect, if the communications device is the terminal, the transmission control unit is specifically configured to: establish a data flow transmission connection to an access node of the target access network, and transmit the first data flow by using the data flow transmission connection based on the second-type QoS parameter and the second-type data flow template.

With reference to the seventh possible implementation of the third aspect, in an eighth possible implementation of the third aspect, the communications device further includes a sending unit, and
the sending unit is configured to: send the second-type QoS parameter, the second-type data flow template, and information about the target access network to an access network device, and establish the data flow transmission connection to the access node of the target access network under control of the access network device; or
send the second-type QoS parameter and the second-type data flow template to the access node of the target access network, and establish the data flow transmission connection to the access node of the target access network.

With reference to the seventh possible implementation of the third aspect, in a ninth possible implementation of the third aspect, after the controlling, by the communications device, transmission of the first data flow based on the second-type QoS parameter and the second-type data flow template, the method further includes:
obtaining, by the communications device, a third QoS policy corresponding to a second data flow, where the third QoS policy is based on a layer 3 protocol and/or a layer 4 protocol;
determining an access network that is in the candidate access network and that supports the third QoS policy as a target access network used during transmission of the second data flow;
converting a first-type QoS parameter included in the third QoS policy into a second-type QoS parameter matching the target access network used during transmission of the second data flow, and converting a first-type data flow included in the third QoS policy into a second-type data flow template matching the target access network used during transmission of the second data flow; and
transmitting the second data flow based on the second-type QoS parameter and the second-type data flow template that are obtained through conversion.

It may be learned that the terminal in this embodiment of the present invention may simultaneously access different access networks, and transmit data by using different access networks based on different QoS parameters and data flow templates.

According to a fourth aspect, a core network device is disclosed. The core network device includes:
a determining unit, configured to determine a first QoS policy of a first data flow, where the first QoS policy includes a first-type data flow template and a first-type QoS parameter that correspond to the first data flow, where
the determining unit is further configured to determine, based on the first-type QoS parameter and information about a candidate access network, an access network that is in the candidate access network and that supports the first QoS policy as a target access network; and
a sending unit, configured to send the first-type data flow template, the first-type QoS parameter, and information about the target access network to an access network device, so that the access network device determines a second-type data flow template and a second-type QoS parameter that match the target access network, and controls data transmission based on the second-type data flow template and the second-type QoS parameter.

With reference to the fourth aspect, in a first possible implementation of the fourth aspect, the second-type QoS parameter includes at least a service priority matching the target access network and service description information matching the target access network; the second-type data flow template includes at least the second-type address parameter and/or the second-type data flow identity; the first-type data flow template is a data flow template based on a layer 3 protocol and/or a layer 4 protocol; and the second-type data flow template is a data flow template based on a layer 2 protocol and/or a layer 1 protocol.

With reference to the fourth aspect or the first possible implementation of the fourth aspect, in a second possible implementation of the fourth aspect, the core network device further includes a judging unit, where
the judging unit is configured to: if there is no access network that is in the candidate access network and that supports the first QoS policy, determine whether a service corresponding to the first data flow is a service whose QoS requirement is allowed to be lowered;
the determining unit is further configured to: if the service corresponding to the first data flow is a service whose QoS requirement is allowed to be lowered, determine a second QoS policy; and determine an access network that is in the candidate access network and that supports the second QoS policy as an updated target access network, where the second QoS policy includes the first-type data flow template and an updated second-type QoS parameter; and
the sending unit is further configured to send the first-type data flow template, the updated first-type QoS parameter, and information about the updated target access network to the access network device, so that the access network device determines a third-type data flow template and a third-type QoS parameter that match the updated target access network, and controls data transmission based on the third-type data flow template and the third-type QoS parameter.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a block diagram of an existing wireless communications system;
FIG. 2 is a block diagram of a wireless communications system according to an embodiment of the present invention;
FIG. 3 is a schematic flowchart of a data transmission control method according to Embodiment 1 of the present invention;
FIG. 4 is a schematic diagram of an OSI 7-layer model according to Embodiment 1 of the present invention;
FIG. 5 is a schematic flowchart of a data transmission control method according to Embodiment 2 of the present invention;
FIG. 6 is a schematic flowchart of a data transmission control method according to Embodiment 3 of the present invention;
FIG. 7 is a schematic flowchart of a data transmission control method according to Embodiment 4 of the present invention;
FIG. 8 is a schematic flowchart of determining a target access network according to Embodiment 4 of the present invention;
FIG. 9 is a schematic flowchart of a data transmission control method according to Embodiment 5 of the present invention;
FIG. 10 is a structural block diagram of a communications device according to Embodiment 6 of the present invention;
FIG. 11 is another structural block diagram of a communications device according to Embodiment 6 of the present invention;
FIG. 12 is a structural block diagram of a core network device according to Embodiment 7 of the present invention;
FIG. 13 is another structural block diagram of a core network device according to Embodiment 7 of the present invention;
FIG. 14 is a structural block diagram of a core network device according to Embodiment 8 of the present invention; and
FIG. 15 is a structural block diagram of a communications device according to Embodiment 9 of the present invention.

### DESCRIPTION OF EMBODIMENTS

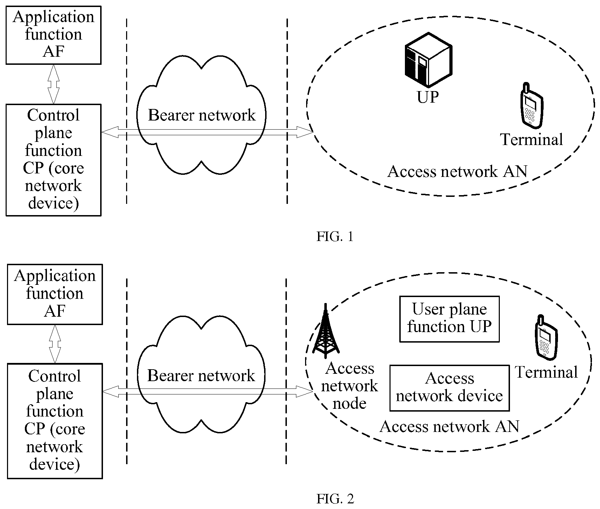

Following embodiments 2, 4, 5, 7 and 8 are for illustrative purpose only and they do not fall within the scope of the claims. FIG. 1 is a block diagram of an existing wireless communications system. The wireless communications system includes: a terminal, an AN (Access Network, access network), a UP (User Plane Functions, user plane function), a CP (Control Plane Functions, control plane function), and an AF (Application Function, application function). The terminal is also referred to as UE (User Equipment, user equipment). The CP is a control entity at a core network side, and the core network may be a 5G network. The access network may be a 5G access network, an evolved LTE (eLTE for short) access network, and a non-3GPP access network (for example, a WLAN). Specifically, the core network may directly perform a data service with the access network by using a bearer network, and the terminal needs to be connected to the core network by using the access network.

In addition, quality of service (QoS) further needs to be controlled, and an existing QoS control procedure includes the following steps:
1. UE sets up a session with an access network, that is, UE selects an access network for accessing from accessible access networks based on a current service.
2. An AF sends a QoS request (request) to a CP Function, where the QoS request includes description information of the session that is currently set up by the UE, for example, QoS information such as a packet filter (data packet filter) and flow bitrate (data flow bitrate) that are included in the current session.
3. The CP determines a QoS policy based on a requirement of an operator, and sends a QoS Request to a UP. The QoS Request includes the QoS policy. The QoS policy is a series of QoS parameters of data flows between a control core network, the access network, and the UE.
4. The CP sends QoS setup (setting indication) to the AN, where the QoS setup includes the QoS policy.
5. The CP sends a QoS request to the UE, where the QoS request includes the QoS policy.
6a. The AN performs QoS management on data transmission between the UE and the AN based on the received QoS policy.
6b. The UE performs QoS management on data transmission between the UE and the AN based on the received QoS policy.
7. The AN replies an AN QoS setup ack (response) to the CP, indicating that the AN accepts a QoS requirement of the CP.
8. The UP replies a CN QoS setup ack to the CP, indicating that the UP accepts the QoS requirement of the CP.

In the foregoing procedure, the UE sets up the session in step 1, and the CP determines the QoS policy in step 3. Because different types of access networks have different capabilities in supporting QoS, the access network used in the session set up in step 1 cannot satisfy a requirement of the QoS policy, leading to poor service experience of a terminal user.

The principle of the present invention lies in that the QoS policy is determined after the terminal accesses a wireless network, and selects, based on the determined QoS policy, an access network satisfying the QoS policy. In this way, a QoS requirement of transmission of a data flow corresponding to a particular service can be satisfied while QoS is controlled, thereby improving service experience of the terminal.

Embodiments of the present invention provide a wireless communications system. As shown in FIG. 2, the wireless communications system includes: a terminal, an access network, a user plane function UP, a core network device, and an application function AF. The access network includes an access network device and an access network node, and the access network device may be an AN CCF (Central Control Function), namely, an access network central control function. Specifically, the access network device may manage the access network node included the access network, including forwarding signaling to the access network node. The core network device may be a CP. The access network may be a 5G access network, an eLTE access network, or a WLAN. The core network may directly perform a data service with the access network by using a bearer network, and the terminal needs to be connected to the core network by using the access network.

### Embodiment 1:

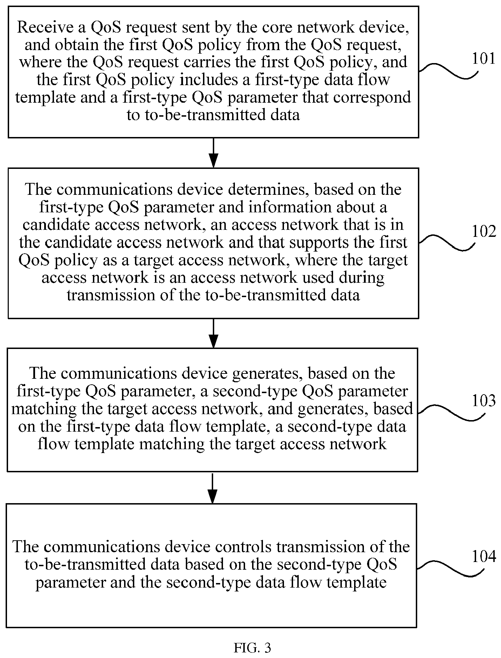

This embodiment of the present invention provides a data transmission control method, applied to the wireless communications system shown in FIG. 2. As shown in FIG. 3, the method includes the following steps.

101. A communications device receives a QoS request sent by the core network device, and obtains the first QoS policy from the QoS request, where the QoS request carries the first QoS policy, and the first QoS policy includes a first-type data flow template and a first-type QoS parameter that correspond to a first data flow.

In this case, a terminal has currently accessed at least one of the following access networks: a 5G access network, an eLTE access network, and a WLAN access network, and set up a session connection to a network side.

It should be noted that a QoS policy (that is, the first QoS policy) herein is determined by the core network device based on a requirement of an operator, and is a series of QoS parameters of a control core network, an access network, and UE. Specifically, the QoS policy may include the following parameters:
(1) A data flow template (Flow Template) is used for identifying different data flows. A first data flow template in the present invention is a data flow template based on L3 (that is, a network layer in an ISO 7-layer model - layer 3 layer 3) and/or L4 (that is, a transport layer in the ISO 7-layer model - layer 4 layer 4).
   For example, the data flow template may include at least one of the following content or a combination thereof: a source (that is, a data flow sender) IP address, a source port number, a destination (that is, a data flow receiver) IP address, a destination port number, and a protocol type (for example, TCP, UDP, and RSVP (Resource Reservation Protocol, Resource Reservation Protocol)).
2) A QoS parameter (that is, the first-type QoS parameter) of a data flow corresponding to the data flow template (that is, a data flow identified by the data flow template) may include at least one of the following or a combination thereof: a data flow priority (that is, a service priority), a maximum transmission rate (for example, a maximum bit rate), a delay requirement, reliability (for example, a data packet error rate and a bit error rate), a service type, and a media type (that is, service description information).

102. The communications device determines, based on the first-type QoS parameter and information about a candidate access network, an access network that is in the candidate access network and that supports the first QoS policy as a target access network, where the target access network is an access network used during transmission of the first data flow.

Specifically, the access network supporting the first QoS policy is an access network satisfying that the first QoS policy includes the first-type QoS parameter. The information about the candidate access network includes at least one of the following: information about an access network that has been currently accessed by the terminal, information about an access network that is currently accessible to the terminal, a type of an access network supported by the terminal, preconfigured access network selection policy information, and load information of a currently accessible access network. It should be noted that the terminal may have accessed a plurality of access networks. This is not limited herein.

During specific implementation, after determining the target access network, the communications device may further generate an association table, where the association table records a correspondence between the first data flow and the target access network. Certainly, different data flows may have different QoS requirements. Therefore, different target access networks may be determined for different data flows, and a correspondence between each data flow and a target access network that is determined by the communications device for the data flow needs to be recorded. In addition, a QoS parameter corresponding to the first data flow and a data flow template used by the first data flow may further be recorded in the association table.

103. The communications device generates, based on the first-type QoS parameter, a second-type QoS parameter matching the target access network, and generates, based on the first-type data flow template, a second-type data flow template matching the target access network.

Actually, the communications device converts both the first-type QoS parameter and the first-type data flow template into formats matching a requirement of a protocol of the target access network.

Specifically, a service priority included in the first-type QoS parameter is converted into a service priority matching the target access network, and service description information included in the first-type QoS parameter is converted into service description information matching the target access network. The second-type QoS parameter includes at least the service priority matching the target access network and the service description information matching the target access network.

In addition, a second-type address parameter matching the target access network and/or a second-type data flow identity matching the target access network are determined based on a first-type address parameter and/or a first-type data flow identity that are/is included in the first-type data flow template. The second-type data flow template includes at least the second-type address parameter and/or the second-type data flow identity.

The first-type address parameter includes at least a first-type data flow source address and/or a first-type data flow destination address, and the second-type address parameter includes at least a second data flow source address and/or a second-type data flow destination address. For example, a source address matching the target access network and a destination address matching the target access network are determined based on the source port number, the source IP address, the destination port number, and the destination IP address that are included in the first-type data flow template.

Herein, because the core network device is based on a layer 3 protocol and/or a layer 4 protocol, first QoS is determined by the core network device according to standards of the layer 3 protocol and/or the layer 4 protocol. Therefore, the first-type data flow template is a data flow template based on the layer 3 protocol and/or the layer 4 protocol.

The communications device in this embodiment may be the terminal or access network device shown in FIG. 2. The terminal supports a layer 2 protocol, a layer 1 protocol, the layer 3 protocol, and the layer 4 protocol. The access network device supports the layer 2 protocol and the layer 1 protocol. Therefore, the terminal or the access network device converts a received data flow template based on the layer 3 protocol and/or the layer 4 protocol into the second-type data flow template based on the layer 2 protocol and/or the layer 1 protocol.

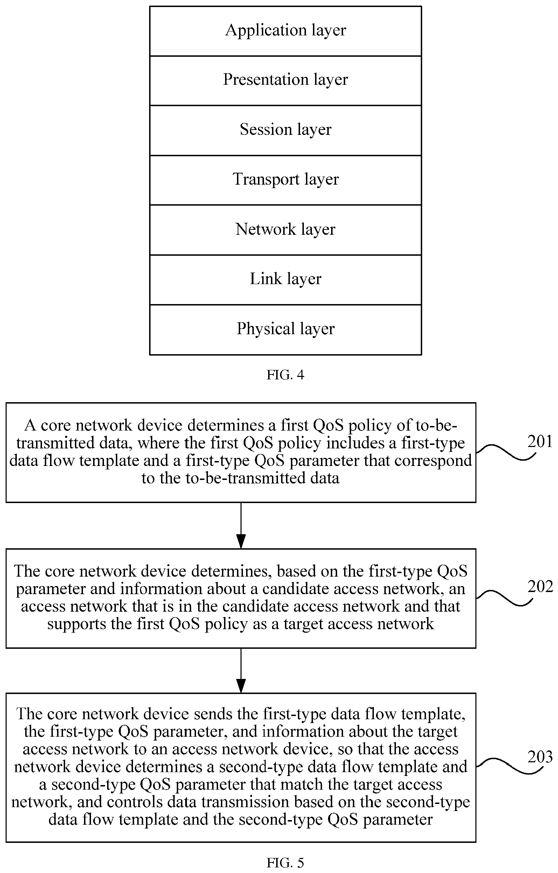

Referring to a schematic diagram of an OSI (Open System Interconnection Reference Model) 7-layer model shown in FIG. 4, the layer 3 is a network layer of the OSI 7-layer model, the layer 4 is a transport layer of the OSI 7-layer model, the layer 2 is a data link layer of the OSI 7-layer model, and the layer 1 is a physical layer of the OSI 7-layer model.

104. The communications device controls transmission of the first data flow based on the second-type QoS parameter and the second-type data flow template.

During specific implementation, specifically, step 104 is described in detail herein by using an example in which the communications device is an access network device or a terminal.
1. If the communications device is an AN CCF, the "controlling transmission of the first data flow based on the second-type QoS parameter and the second-type data flow template" includes: sending, by the access network device, the second-type QoS parameter, the second-type data flow template, and information about the target access network to the terminal, so that the terminal controls transmission of the first data flow based on the second-type QoS parameter and the second-type data flow template; and/or
   sending, by the access network device, the second-type QoS parameter and the second-type data flow template to an access node of the target access network, so that the access node of the target access network controls transmission of the first data flow based on the second-type QoS parameter and the second-type data flow template.
   It should be noted that the target access network herein may be a type of access networks such as a WLAN access network, or may be a specified access network such as a WLAN access network A. If the target access network is a type of access networks, the access network device may deliver type information of the target access network, the second-type QoS parameter, and the second-type data flow template to the terminal. The terminal selects one of the type of access networks included in the candidate access network to transmit the first data flow, and controls data transmission based on the second-type QoS parameter and the second-type data flow template.
   If the target access network is a specified access network, the access network is a type of access networks that are determined based on the first QoS policy and that support the first QoS policy, and an access network is selected from the type of access networks included in the candidate access network as the target access network. Then, the information about the target access network, the second-type QoS parameter, and the second-type data flow template are sent to the terminal, so that the terminal and the access node of the target access network transmit the first data flow. Alternatively, the second-type QoS parameter and the second-type data flow template may be sent to the access node of the target access network, and the access node may page the terminal and establish a data flow transmission connection to the terminal for transmitting the first data flow after the terminal makes a response. Certainly, the information about the target access network, the second-type QoS parameter, and the second-type data flow template may alternatively be sent to the terminal, and the second-type QoS parameter and the second-type data flow template are sent to the access node of the target access network.
2. If the communications device is a terminal (UE), the "controlling transmission of the first data flow based on the second-type QoS parameter and the second-type data flow template" includes: establishing, by the communications device, a data flow transmission connection to an access node of the target access network, and transmitting the first data flow by using the data flow transmission connection based on the second-type QoS parameter and the second-type data flow template.

Herein, the target access network determined by the terminal based on the first QoS policy is a specified access network. After establishing the data flow transmission connection to the access node of the target access network, the terminal may further send the second-type QoS parameter and the second-type data flow template to the access node of the target access network, so that the access node of the target access network controls data transmission based on the second-type QoS parameter and the second-type data flow template.

Further, the establishing, by the communications device, a data flow transmission connection to an access node of the target access network specifically includes:
sending, by the terminal, the second-type QoS parameter, the second-type data flow template, and information about the target access network to an access network device, and establishing the data flow transmission connection to the access node of the target access network under control of the access network device; or
sending, by the terminal, the second-type QoS parameter and the second-type data flow template to the access node of the target access network, and establishing the data flow transmission connection to the access node of the target access network.

In the present invention, steps 101 to 104 are performed by the communications device, which may be the terminal or access network device shown in FIG. 2.

It should be noted that the "controlling data transmission based on the second-type QoS parameter and the second-type data flow template" may be: first identifying a data packet of the first data flow based on the second-type data flow template; and then, determining, based on a service priority and/or delay requirement of the first data flow included in the second QoS parameter, whether the data packet of the first data flow can be transmitted at a higher priority, allocating a transmission bandwidth to the first data flow based on a maximum bit rate of the data flow, and determining an encoding/decoding manner of the first data flow based on reliability parameters of the data flow.

According to the data transmission control method provided in this embodiment of the present invention, after accessing a wireless network, the terminal obtains the first QoS policy, and determines the access network that is in the candidate access network and that supports the first QoS policy as the target access network. The first-type QoS parameter included in the first QoS policy is converted into the second-type QoS parameter matching the target access network, and the first-type data flow template is converted into the second-type data flow template matching the target access network. Finally, transmission of the first data flow can be controlled based on the second-type QoS parameter and the second-type data flow template. In the prior art, after the terminal sets up a session with a network side, the core network device determines a QoS policy. An access network used when the session is set up may not satisfy a requirement of the QoS policy, leading to poor service experience of a terminal user. Comparatively, in the present invention, an access network satisfying the QoS policy is selected based on the determined QoS policy. In this way, a QoS requirement of transmission of a data flow corresponding to a particular service can be satisfied while QoS is controlled, thereby improving service experience of the terminal.

### Embodiment 2:

This embodiment of the present invention further provides a data transmission control method, performed by the core network device shown in FIG. 2. As shown in FIG. 5, the method includes the following steps:
201. The core network device determines a first QoS policy of a first data flow, where the first QoS policy includes a first-type data flow template and a first-type QoS parameter that correspond to the first data flow.

202. The core network device determines, based on the first-type QoS parameter and information about a candidate access network, an access network that is in the candidate access network and that supports the first QoS policy as a target access network.

The information about the candidate access network includes at least one of the following:
information about an access network that has been currently accessed by the terminal, information about an access network that is currently accessible to the terminal, a type of an access network supported by the terminal, preconfigured access network selection policy information, and load information of a currently accessible access network.

203. The core network device sends the first-type data flow template, the first-type QoS parameter, and information about the target access network to an access network device, so that the access network device determines a second-type data flow template and a second-type QoS parameter that match the target access network, and controls data transmission based on the second-type data flow template and the second-type QoS parameter.

It should be noted that the second-type QoS parameter includes at least a service priority matching the target access network and service description information matching the target access network; the second-type data flow template includes at least the second-type address parameter and/or the second-type data flow identity; the first-type data flow template is a data flow template based on a layer 3 protocol and/or a layer 4 protocol; and the second-type data flow template is a data flow template based on a layer 2 protocol and/or a layer 1 protocol.

Further, if there is no access network that is in the candidate access network and that supports the first QoS policy, the method further includes:
determining whether a service corresponding to the first data flow is a service whose QoS requirement is allowed to be lowered; if the service corresponding to the first data flow is a service whose QoS requirement is allowed to be lowered, determining a second QoS policy, where the second QoS policy includes the first-type data flow template and an updated second-type QoS parameter; and determining an access network that is in the candidate access network and that supports the second QoS policy as an updated target access network; and
sending, by the core network device, the first-type data flow template, the updated first-type QoS parameter, and information about the updated target access network to the access network device, so that the access network device determines a third-type data flow template and a third-type QoS parameter that match the updated target access network, and controls data transmission based on the third-type data flow template and the third-type QoS parameter.

According to the data transmission control method provided in this embodiment of the present invention, after accessing a wireless network, the terminal obtains the first QoS policy, and determines the access network that is in the candidate access network and that supports the first QoS policy as the target access network. The first-type QoS parameter included in the first QoS policy is converted into the second-type QoS parameter matching the target access network, and the first-type data flow template is converted into the second-type data flow template matching the target access network. Finally, transmission of the first data flow can be controlled based on the second-type QoS parameter and the second-type data flow template. In the prior art, after the terminal sets up a session with a network side, the core network device determines a QoS policy. An access network used when the session is set up may not satisfy a requirement of the QoS policy, leading to poor service experience of a terminal user. Comparatively, in the present invention, an access network satisfying the QoS policy is selected based on the determined QoS policy. In this way, a QoS requirement of transmission of a data flow corresponding to a particular service can be satisfied while QoS is controlled, thereby improving service experience of the terminal.

### Embodiment 3:

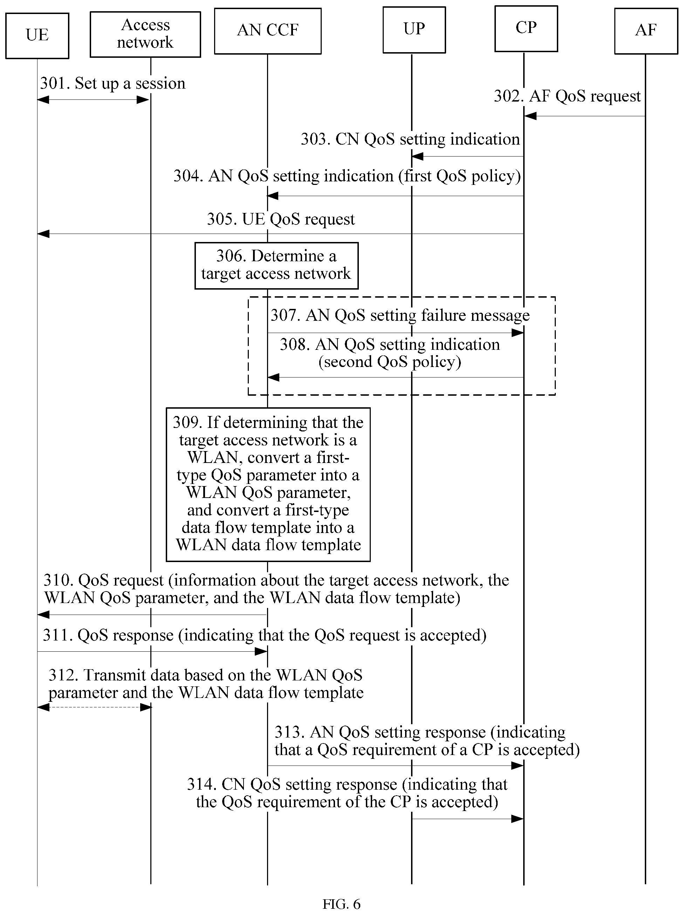

This embodiment of the present invention provides a data transmission control method, and an access network satisfying a QoS policy is determined based on an access network device. As shown in FIG. 6, the method specifically includes the following steps.

301. UE sets up a session with an access network.

During specific implementation, the UE accesses at least one of the following access networks: a 5G access network, an eLTE access network, and a WLAN access network, and receives a message from a 5G core network by using the accessed access network. That the UE accesses the 5G access network, the eLTE access network, and/or the WLAN access network may be specifically: the UE accesses a 5G cell and/or an eLTE cell and/or a WLAN AP (Access Point, access point).

302. An AF sends an AF QoS request (request) to a CP.

The AF QoS request includes description information of the session set up on the UE, for example, QoS information such as a packet filter (data packet filter) and flow bitrate (data flow bit rate) of a data flow included in the session.

303. The CP determines a first QoS policy based on a requirement of an operator, and sends CN QoS setup (setting indication) to a UP, where the CN QoS setup includes the first QoS policy.

The first QoS policy is a series of QoS parameters required by a control core network, the access network, and the UE, and includes at least a first-type QoS parameter and a first-type data flow template. Specifically, (1) the first-type data flow template (Flow Template) is used for identifying different data flows. The data flow template is based on L3 and/or L4. L3 is the layer 3 layer 3 in an OSI 7-layer model, for example, IP. L4 is the layer 4 layer 4 in the OSI 7-layer model, for example, TCP, UDP, and RSVP (Resource Reservation Protocol, Resource Reservation Protocol) protocol. The first-type data flow template may include at least one of the following content or a combination thereof: a source (that is, a data flow sender) IP address, a source port number, a destination (that is, a data flow receiver) IP address, a destination port number, and a protocol type (for example, TCP, UDP, and RSVP).

(2) A first-type QoS parameter of a first data flow corresponding to the first-type data flow template may include at least one of the following or a combination thereof: a data flow priority, a maximum transmission rate (for example, a maximum bit rate), a delay requirement, reliability (for example, a data packet error rate and a bit error rate), a service type, a media type, and the like.

In addition, the UP may control transmission of data flows of the session (the session set up in step 301) based on a received QoS policy. For example, the data flows may be identified by using the first-type data flow template. It is determined based on priorities and/or delay requirements of the data flows that data packets of which data flows are transmitted at a higher priority, a transmission bandwidth is allocated based on a maximum bit rate of the data flows, and an encoding/decoding manner of the data flows is determined based on reliability parameters of the data flows.

304. The CP sends AN QoS setup to an AN CCF, where the AN QoS setup includes the first QoS policy.

It should be noted that the AN QoS setup message may include all content of the first QoS policy, or carry only a part of content of the first QoS policy. Specifically, the AN (access network) includes the AN CCF (access network device) and an access network of a specific particular type (including a 5G RAN, an eLTE RAN, a WLAN, and the like).

Similarly, the AN may alternatively control transmission of data flows of the session based on a received QoS policy. For example, the data flows may be identified by using a data flow template. It is determined based on priority levels and/or delay requirements of the data flows that data packets of which data flows are transmitted at a higher priority, an uplink data flow transmission bandwidth is allocated based on a maximum bit rate of uplink data flows, an uplink session transmission bandwidth is allocated based on an uplink session bit rate, and an encoding/decoding manner of the data flows is determined based on reliability parameters of the data flows.

305. The CP sends a UE QoS request to the UE, where the UE QoS request includes the first QoS policy.

Similarly, the QoS policy in the UE QoS setup message may include all content of the first QoS policy, or carry only a part of content of the first QoS policy.

In addition, the UE may further reply a UE QoS response (response) to the CP, indicating that the UE accepts a QoS requirement of the CP. This step may alternatively be performed after step 311.

306. After receiving the AN QoS setup (that is, the QoS request described in step 101 in the present invention) from the CP, the AN CCF determines a target access network used by a first data flow.

Specifically, the AN CCF may determine the target access network based on the first-type QoS parameter of the first data flow and information about a candidate access network. The information about the candidate access network includes at least one of the following: information about an access network that has been currently accessed by a terminal (UE), information about an access network that is currently accessible to the terminal, a type of an access network supported by the terminal, preconfigured access network selection policy information, and load information of a currently accessible access network.

During specific implementation, the access network may report its load information (for example, a load percentage (that is, a percentage of a resource that has been used) or a load indication) to the AN CCF for the AN CCF to make the foregoing determining.

Further, after determining the target access network, the AN CCF may further generate an association table, where the association table records a correspondence between the first data flow and the target access network.

For example, the flow template (the first-type data flow template) and the first-type QoS parameter of the first data flow are associated with (or referred to as bound to binding) the used target access network. The association table may be shown in Table 1:

**Table 1**

| Flow ID (data flow identity) | Flow Template (data flow template) | Access Network (access network) | QoS Parameters (QoS parameter) |
|---|---|---|---|
| 1 | FlowTemplatel (data flow template 1) | 5G | QoSparameterset1 (QoS parameter 1) |
| 2 | FlowTemplate2 (data flow template 2) | eLTE | QoSparameterset2 (QoS parameter 2) |
| 3 | FlowTemplate3 (data flow template 3) | WLAN | QoSparameterset3 (QoS parameter 3) |
| ... | | | |

307. If the AN CCF cannot find an access network supporting the first QoS policy, the AN CCF sends AN QoS setup failure (setting failure message) to the CP.

The AN CCF indicates to the CP by using the AN QoS setup failure that the first QoS policy cannot be satisfied, and instructs the CP to modify the first QoS policy.

308. After receiving the AN QoS setup failure replied by the AN CCF, the CP may re-send AN QoS setup to the AN CCF, where the AN QoS setup includes a modified QoS policy (the second QoS policy described in the present invention).

The AN CCF re-performs step 306 based on the second QoS policy. In addition, the CP may send CN QoS setup to the UP, where the CN QoS setup includes the modified QoS policy (the second QoS policy).

Note: After receiving the AN QoS setup failure replied by the AN, the CP may alternatively send AF QoS reject to the AF, that is, reject the QoS request of the AF. In addition, the CP may send CN QoS setup cancel to the UP, and cancel the QoS policy sent to the UP, so that the UP no longer allocates a resource to a related data flow.

309. If determining that the target access network is a WLAN, the AN CCF converts a first-type QoS parameter into a second-type QoS parameter matching the WLAN, and converts a first-type data flow template into a second-type data flow template matching the WLAN.

That is, a part or all of the first data flow is transmitted by using the WLAN. Therefore, for a data flow transmitted by using the WLAN, the AN CCF generates a WLAN data flow template, and converts the first-type QoS parameter that is in a received first QoS policy and that corresponds to the first data flow into a WLAN QoS parameter, that is, the sccond-typc QoS parameter. Details arc as follows:
(1) The WLAN data flow template may be a MAC (Medium Access Control, Medium Access Control protocol) address or a WLAN data flow identity. The AN CCF associates the WLAN-used data flow template with the first-type data flow template, as shown in FIG. 2 below:

**Table 2**

| WLAN Flow Template | Flow Template |
|---|---|
| (WLAN data flow template, that is, a second-type data flow template) | (Data flow template based on an L3/L4 protocol, that is, a first-type data flow template) |
| Source MAC address 3 (source MAC address 3), destination MAC address 3 (destination MAC address 3), and WLAN Flow ID 1 (data flow identity) | Source IP address 1 (source IP address 1), source port number 1 (source port number 1), destination IP address 3 (destination IP address 3), destination port number 3 (destination port number 3), and UDP (protocol type) |
| Source MAC address 4 (source MAC address 4), destination MAC address 4 (destination MAC address 4, and WLAN Flow ID 2 (data flow identity) | Source IP address 1 (source IP address 1), source port number 1 (source port number 1), destination IP address 4 (destination IP address 4), destination port number 4 (destination port number 4), and TCP (protocol type) |

(2) The WLAN QoS parameter may be a WLAN QoS parameter stipulated in the IEEE 802.11e protocol/WMM protocol (WMM: Wi-Fi Multimedia, that is, the Wi-Fi multimedia protocol, which is a part of the IEEE 802.11e protocol). The AN converts the first-type QoS parameter into the WLAN QoS parameter, that is, the second-type QoS parameter. Specifically, for example, mapping shown in Table 3 is performed.

**Table 3**

| First-Type QoS parameter | | WLAN QoS parameter (second-type QoS parameter) | |
|---|---|---|---|
| Priority (priority) | Services (service description information) | 802.1p Priority | WMM Access Category (service description information in a WLAN) |
| 2 | Conversational Voice (voice session) | 6 | Voice (voice) |
| 4 | Conversational Video (video session), for example, Live Streaming (live streaming) | 4 | Video (video) |
| 3 | Real Time Gaming (real-time gaming) | 4 | Video (video) |
| 5 | Non-Conversational Video (non-conversational video) such as buffered streaming (buffered streaming) | 3 | Best effort (best-effort service) |
| 1 | IMS Signaling (IP multimedia subsystem signaling) | 7 | Voice (video) |
| 6 | Video (video), for example, buffered streaming; TCP-based (TCP-based data flow) such as www (web page browsing), email (email), chat (chat), ftp (text transfer), p2p file sharing (file sharing), and progressive video (progressive video) | 3 | Best effort (best-effort service) |

It should be noted that in the foregoing table, a data flow service type/WMM access category and a corresponding data flow priority (priority) are mainly used as an example, and other QoS parameters such as a maximum rate, a delay requirement, and reliability (for example, a data packet error rate and a bit error rate) are omitted. Different access categories (voice voice, video video, best effort best effort, and background background) defined by the WMM access category (WMM access category) have corresponding requirements such as a maximum rate, a delay requirement, and reliability (for example, a data packet error rate and a bit error rate).

310. The AN CCF sends a QoS request to the UE, where the QoS request includes information about the access network (which is the WLAN herein), and the WLAN data flow template and the corresponding WLAN QoS parameter that are determined in step 309.

That is, the AN CCF sends the information about the target access network, the second-type QoS parameter, and the second-type data flow template to the UE. The information about the target access network may be identification information of an access network, or may be type information of a type of access networks, for example, a WLAN.

Specifically, (1) if the UE has established a WLAN connection to a WLAN AP, the AN CCF may send the QoS request to the WLAN AP, and the WLAN AP sends the QoS request to the UE.

Alternatively, (2) if the AN CCF has established a connection to the UE by using a 5G/eLTE RAN, the AN CCF may send the QoS request to the 5G/eLTE RAN, and the 5G/eLTE RAN sends the QoS request to the UE.

Alternatively, (3) if the AN CCF has not established a connection to the UE by using a 5G/eLTE RAN, the AN CCF may send the QoS request to the 5G/eLTE RAN, the 5G/eLTE RAN pages the UE, the UE responds to the paging and establishes a connection to the 5G/eLTE RAN, and then the 5G/eLTE RAN sends the QoS request to the UE.

It should be noted that regardless of whether the UE has established a WLAN connection to the WLAN AP, the foregoing manners (2) and (3) can be used. In this case, the AN CCF sends a corresponding QoS request to the WLAN, so that the WLAN prepares, according to the QoS request, a radio resource required for data flow transmission.

311. The UE sends a QoS response (response) to the AN CCF, indicating that the UE accepts the QoS request.

312. The UE transmits a corresponding data flow by using the WLAN based on the WLAN data flow template and the WLAN QoS parameter, to control data transmission.

It should be noted that before step 310, if the UE has not established a WLAN connection to the WLAN AP, the UE first establishes a WLAN connection to the WLAN AP, and then transmits the corresponding data flow by using the WLAN based on the WLAN data flow template and the WLAN QoS parameter. Specifically, the UE identifies, based on the WLAN data flow template, a WLAN data flow corresponding to the WLAN data flow template, determines a priority, a bandwidth, an encoding/decoding manner, and the like of transmission of the data flow based on the WLAN QoS parameter such as a priority, a maximum rate, and a reliability parameter, and performs transmission.

313. The AN CCF replies AN QoS setup ack (setting response) to the CP, indicating that the AN CCF accepts a QoS requirement of the CP.

This step may alternatively be performed after step 304.

314. The UP replies CN QoS setup ack to the CP, indicating that the UP accepts the QoS requirement of the CP.

This step may also be performed after step 303.

In steps 309 to 312, the data transmission control method provided in this embodiment of the present invention is described by using an example in which the target access network is a WLAN. Steps 309 to 312 may be sequentially replaced with steps 309a to 312a, which specifically includes the following steps.

309a. If determining that the target access network is a 5G/eLTE RAN, the AN CCF converts a first-type QoS parameter into a second-type QoS parameter matching the 5G/eLTE RAN, and converts a first-type data flow template into a second-type data flow template matching the 5G/eLTE RAN.

That is, a part or all of the data flow is transmitted by using the 5G/eLTE RAN. Therefore, for a data flow transmitted by using the 5G/eLTE RAN, the AN CCF generates a 5G/eLTE radio access data flow template (5G/eLTE radio flow template), and converts the first-type QoS parameter that is in a received first QoS policy and that corresponds to the first data flow into a 5G/eLTE radio access QoS parameter, that is, the second-type QoS parameter. Details are as follows:
(1) The 5G/eLTE radio access data flow template may be a 5G/LTE radio bearer identity (radio bearer identity) or a 5G/LTE radio flow identity (radio flow identity). The AN CCF associates the 5G/eLTE radio access data flow template with the first-type data flow template, as shown in FIG. 4 below:

**Table 4**

| 5G/eLTE Radio Flow Template | Flow Template |
|---|---|
| (5G/eLTE data flow template, that is, a second-type data flow template | (Data flow template based on an L3/L4 protocol, that is, a first-type data flow template) |
| Source L2 address (source L2 address), destination L2 address (destination L2 address), and radio flow identity 1 (identity of a data flow 1, for example, radio flow identity = 1) | Source IP addr 1 (source IP address 1), source port number 1 (source port number 1), destination IP addr 1 (destination IP address 1), destination port number 1 (destination port number 1), and TCP (protocol type) |
| Source L2 address, destination L2 address, and radio flow identity 2 (for example, radio flow identity = 2) | Source IP addr 1 (source IP address 1), source port number 1 (source port number 1), destination IP addr 2 (destination IP address 2), destination port number 2 (destination port number 2), and TCP (protocol type) |

It should be noted that the source L2 address in Table 4 may be an L2 address of the UE, and the destination L2 address may be an L2 address of a 5G/eLTE access network device, so that in subsequent steps, the UE determines the 5G/eLTE access network device based on the destination L2 address, and the 5G/eLTE access network device determines the UE based on the source L2 address. Alternatively, the source L2 address is an L2 address of a 5G/eLTE access network device, and the destination L2 address is an L2 address of the UE, so that in subsequent steps, the UE determines the 5G/eLTE access network device based on the source L2 address, and the 5G/eLTE access network device determines the UE based on the destination L2 address. A radio flow identity is used to identify a particular data flow transmitted between the UE and the 5G/eLTE access network device.
(2) The 5G/eLTE radio access QoS parameter may be a 5G/LTE radio bearer QoS parameter or a 5G/LTE radio flow QoS parameter. The 5G/LTE radio bearer QoS parameter may also be referred to as a radio bearer service attribute (radio bearer service attribute). The 5G/LTE radio flow QoS parameter may also be referred to as a radio flow service attribute (radio flow service attribute). The AN CCF converts the received first-type QoS parameter of the first data flow into the 5G/eLTE RAN QoS parameter, that is, the second-type QoS parameter. Specifically, refer to Table 5:

**Table 5**

| First-Type QoS Parameter | | 5G/eLTE RAN QoS Parameter (Second-type QoS parameter) | |
|---|---|---|---|
| Priority (Priority ) | Services | Priority | Service type (service type) |
| 2 | Conversational Voice (voice session) | 2 | Voice (voice) |
| 4 | Conversational Video (video session) such as Live Streaming (live streaming) | 4 | Video (video) |
| 3 | Real Time Gaming (real-time gaming) | 3 | Video (video) |
| 5 | Non-conversational video (non-conversational video) such as buffered streaming (buffered streaming) | 5 | Best effort (best-effort service) |
| 1 | IMS Signaling (IP multimedia subsystem signaling) | 1 | Voice (video) |
| 6 | Video (video), for example, buffered streaming; TCP-based (TCP-based data flow) such as www (web page browsing), email (email), chat (chat), ftp (text transfer), p2p file sharing (file sharing), and progressive video (progressive video) | 6 | Best effort (best-effort service) |

It should be noted that in Table 5, a data flow service type and a corresponding data flow priority (priority) are mainly used as an example, and other QoS parameters such as a maximum rate, a delay requirement, and reliability (for example, a data packet error rate and a bit error rate) are omitted.

310a. The AN CCF sends a QoS request to the UE, where the QoS request includes the 5G/eLTE radio access data flow template and the corresponding 5G/eLTE radio access QoS parameter that are determined in step 309a.

That is, the AN CCF sends the information about the target access network, the second-type QoS parameter, and the second-type data flow template to the UE. The information about the target access network may be identification information of an access network, or may be type information of a type of access networks, for example, a WLAN.

Specifically, (1) if the AN CCF has established a connection to the UE by using a 5G/eLTE RAN, the AN CCF may send the QoS request to the 5G/eLTE RAN, and the 5G/eLTE RAN sends the QoS request to the UE.

Alternatively, (2) if the AN CCF has not established a connection to the UE by using a 5G/eLTE RAN, the AN CCF may send the QoS request to the 5G/eLTE RAN, the 5G/eLTE RAN pages the UE, the UE responds to the paging and establishes a connection to the 5G/eLTE RAN, and then the 5G/eLTE RAN sends the QoS request to the UE.

Alternatively, (3) if the AN CCF has not established a connection to the UE by using a 5G/eLTE RAN, but has established a connection to the UE in another manner (for example, a WLAN), the AN CCF may send the QoS request to the UE by using the established connection, and the UE establishes a connection to the 5G/eLTE RAN according to the QoS request. In this case, the AN CCF sends a corresponding QoS request to the 5G/eLTE RAN, so that the 5G/eLTE RAN prepares, according to the QoS request, a radio resource required for data flow transmission.

311a. The UE sends a QoS response to the AN CCF, indicating that the UE accepts the QoS request.

312a. The UE transmits a corresponding data flow based on the 5G/eLTE radio access data flow template and the 5G/eLTE radio access QoS parameter by using the 5G/eLTE RAN, to control data transmission.

Specifically, the UE identifies, based on the 5G/eLTE radio access data flow template, a corresponding data flow, determines a priority, a bandwidth, an encoding/decoding manner, and the like of transmission of the data flow based on the 5G/eLTE radio access QoS parameter such as a priority, a maximum rate, and a reliability parameter, and performs transmission.

During specific implementation, the 5G/eLTE processes an uplink data packet based on a radio access data flow template of the uplink data packet and a corresponding 5G/eLTE QoS parameter (that is, the second-type QoS parameter), and sends the uplink data packet to the UP based on an L3/L4 data flow template (that is, the first-type data flow template) corresponding to the uplink data packet. For a downlink data packet, the 5G/eLTE access network processes a downlink data packet based on an L3/L4 data flow template of the downlink data packet and a corresponding QoS parameter, and sends the downlink data packet to the UE based on a 5G/eLTE radio access data flow template corresponding to the downlink data packet.

Specifically, the uplink data packet and the downlink data packet may respectively use formats shown in Table 6 and Table 7.

**Table 6**

| | | | |
|---|---|---|---|
| 5G/eLTE Uplink Radio Flow Template | L3/L4 Based Uplink flow Template | QoS Parameters (QoS parameter) | Payload (effective load) |
| (Second-type data flow template corresponding to an uplink) | (First-type data flow template corresponding to an uplink) | | |

**Table 7**

| | | | |
|---|---|---|---|
| 5G/eLTE Downlink Radio Flow Template | L3/L4 Based Downlink flow Template | QoS Parameters (QoS parameter) | Payload (effective load) |
| (Second-type data flow template corresponding to a downlink) | (First-type data flow template corresponding to a downlink) | | |

According to the data transmission control method provided in this embodiment of the present invention, after the terminal accesses a wireless network, the access network device obtains the first QoS policy, and determines the access network that is in the candidate access network and that supports the first QoS policy as the target access network. The first-type QoS parameter included in the first QoS policy is converted into the second-type QoS parameter matching the target access network, and the first-type data flow template is converted into the second-type data flow template matching the target access network. Finally, transmission of the first data flow can be controlled based on the second-type QoS parameter and the second-type data flow template. In the prior art, after the terminal sets up a session with a network side, the core network device determines a QoS policy. An access network used when the session is set up may not satisfy a requirement of the QoS policy, leading to poor service experience of a terminal user. Comparatively, in the present invention, an access network satisfying the QoS policy is selected based on the determined QoS policy. In this way, a QoS requirement of transmission of a data flow corresponding to a particular service can be satisfied while QoS is controlled, thereby improving service experience of the terminal.

### Embodiment 4:

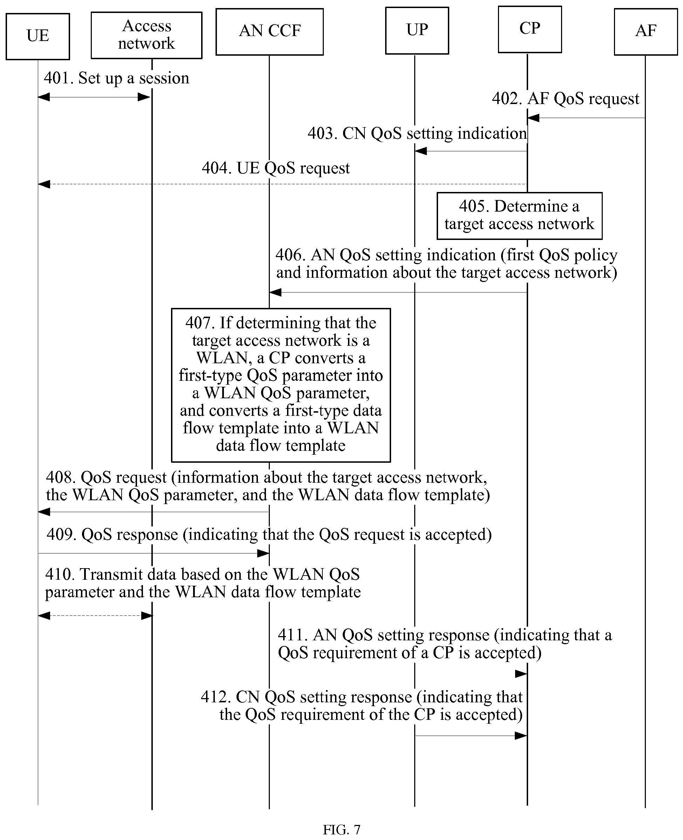

This embodiment of the present invention provides a data transmission control method, and an access network satisfying a QoS policy is determined based on a core network device. As shown in FIG. 7, the method specifically includes the following steps.

401. UE sets up a session with an access network.

During specific implementation, the UE accesses at least one of the following access networks: a 5G access network, an eLTE access network, and a WLAN access network, and receives a message from a 5G core network by using the accessed access network.

402. An AF sends an AF QoS request (request) to a CP.

The AF QoS request includes description information of the session set up on the UE, for example, QoS information such as a packet filter (data packet filter) and flow bitrate (data flow bit rate) of a data flow included in the session.

403. The CP determines a first QoS policy based on a requirement of an operator, and sends a CN QoS request to a UP, where the CN QoS request includes the first QoS policy.

The first QoS policy is a series of QoS parameters required by a control core network, the access network, and the UE, and includes at least a first-type QoS parameter and a first-type data flow template. Specifically,
(1) the first-type data flow template (Flow Template) is used for identifying different data flows. The data flow template is based on L3 and/or L4. L3 is the layer 3 layer 3 in an OSI 7-layer model, for example, IP. L4 is the layer 4 layer 4 in the OSI 7-layer model, for example, TCP, UDP, and RSVP (Resource Reservation Protocol, Resource Reservation Protocol) protocol. The first-type data flow template may include at least one of the following content or a combination thereof: a source (that is: a data flow sender) IP address, a source port number, a destination (that is: a data flow receiver) IP address, a destination port number, and a protocol type (for example, TCP, UDP, and RSVP).
(2) A first-type QoS parameter of a first data flow corresponding to the first-type data flow template may include at least one of the following or a combination thereof: a data flow priority, a maximum transmission rate (for example, a maximum bit rate), a delay requirement, reliability (for example, a data packet error rate and a bit error rate), a service type, a media type, and the like.

In addition, the UP may control transmission of data flows of the session (the session set up in step 301) based on a received QoS policy. For example, the data flows may be identified by using the first-type data flow template. It is determined based on priorities and/or delay requirements of the data flows that data packets of which data flows are transmitted at a higher priority, a transmission bandwidth is allocated based on a maximum bit rate of the data flows, and an encoding/decoding manner of the data flows is determined based on reliability parameters of the data flows.

404. Optionally, the CP sends a UE QoS request to the UE, where the UE QoS request includes the QoS policy.

Certainly, the UE replies a UE QoS response to the CP.

405. The CP determines a target access network used by a first data flow.

During specific implementation, after receiving a QoS request from the AF, the CP determines, based on information about a candidate access network, that an access network supporting the first QoS policy is the target access network. Further, the information about the candidate access network includes at least one of the following: information about an access network that has been currently accessed by a terminal (UE), information about an access network that is currently accessible to the terminal, a type of an access network supported by the terminal, preconfigured access network selection policy information, and load information of a currently accessible access network.

The following points need to be described:
(1) The UE has currently accessed an access network. "Has been accessed" herein means that the UE has established a connection to the access network. During specific implementation, the "information about the access network that has been currently accessed by the UE" may be reported by the AN to the CP function, and the CP function stores the information. Alternatively, the CP Function actively queries the AN the information about the access network that has been currently accessed by the UE.
(2) The information about an access network that is currently accessible to the UE may be reported by the AN to the CP, and the CP stores the information; or the CP queries the AN the access network that is currently accessible to the UE.
(3) The preconfigured access network selection policy information herein may be an access network selection policy of the CP. The access network selection policy may be preconfigured in the CP and dynamically updated, for example, updated by an operator based on an access network use policy (for example, a particular access network is used for a particular type of services or applications). The access network selection policy may be a part of an operator policy.
(4) Determining the target access network based on the load information of a currently accessible access network may be specifically: if an eLTE RAN is overloaded, a particular data flow such as a data flow requiring a low transmission delay, is not transmitted by using the eLTE RAN. In addition, the access network may report its load information (for example, a load percentage (that is, a percentage of a resource that has been used) or a load indication) to the CP for the CP to make the foregoing determining.

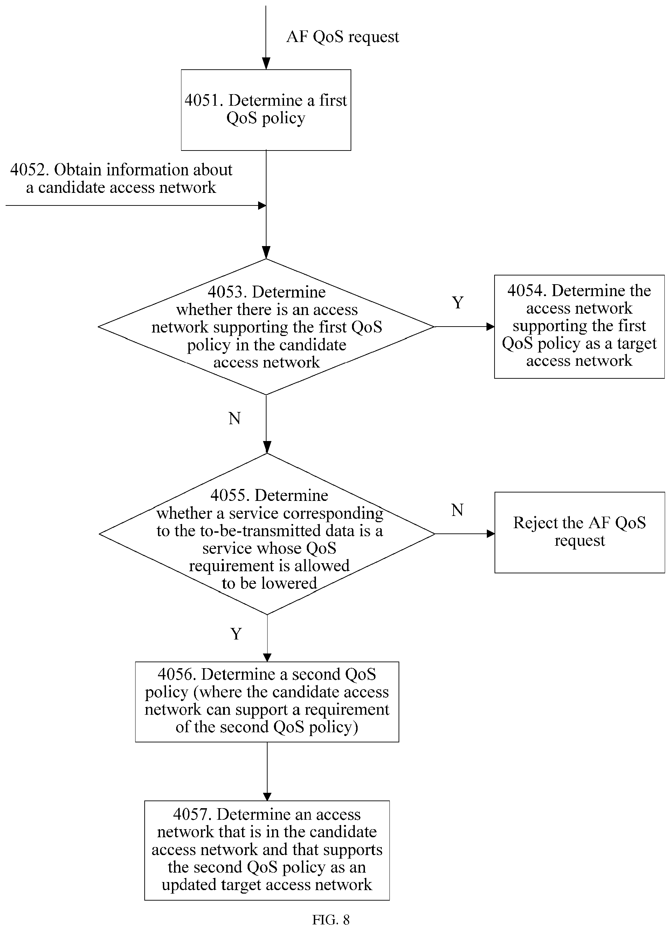

During specific implementation, the CP may determine the target access network by using a procedure shown in FIG. 8, includes the following steps.

4051. Determine a first QoS policy.

This step is step 403, which is performed by the CP after receiving the AF QoS request (request) sent by an A.

4052. Obtain information about a candidate access network.

Herein, the candidate access network may be a set of an access network that has currently been accessed by the terminal and an access network that is accessible to the terminal.

4053. Determine whether there is an access network that is in the candidate access network and that supports the first QoS policy.

That is, in the access network that has currently been accessed by the terminal and the access network that is accessible to the terminal, whether there is an access network satisfying the first QoS policy is determined.

If any, step 4054 is performed; if not, step 4055 is performed.

4054. Determine that the access network supporting the first QoS policy is the target access network.

4055. Determine whether a service corresponding to the first data flow is a service whose QoS requirement is allowed to be lowered.

4056. If the service corresponding to the first data flow is a service whose QoS requirement is allowed to be lowered, determine a second QoS policy.

The second QoS policy includes the first-type data flow template and an updated second-type QoS parameter. Certainly, the updated second-type QoS parameter is still a QoS parameter based on a layer 3 protocol and/or a layer 4 protocol.

4057. Determine an access network that is in the candidate access network and that supports the second QoS policy as an updated target access network.

In addition, the core network device sends the first-type data flow template, the updated first-type QoS parameter, and information about the updated target access network to an access network device, so that the access network device determines a third-type data flow template and a third-type QoS parameter that match the updated target access network, and controls data transmission based on the third-type data flow template and the third-type QoS parameter.

After determining an access network used for transmitting a data flow (that is, the first data flow), the CP may further generate an association table, and record that a flow template of the data flow is associated with (or referred to as bound to binding) the used access network. The association table generated by the CP may be as shown in FIG. 4, and details are not described herein again.

406. The CP sends AN QoS setup to the AN, where the AN QoS setup includes the first QoS policy and information about the target access network.

If the CP determines that a part of data flow in the first data flow is transmitted by using a WLAN, and a part of data flow is transmitted by using a 5G/eLTE RAN, the first QoS policy needs to include a QoS policy corresponding to the data flow transmitted by using the WLAN and a QoS policy corresponding to the data flow transmitted by using the 5G/eLTE RAN. Specifically, the first QoS policy may include a flow template and a corresponding QoS parameter of the data flow transmitted by using the WLAN and a flow template and a corresponding QoS parameter of the data flow transmitted by using the 5G/eLTE RAN.

If the CP determines that all data flow is transmitted by using a WLAN, the first QoS policy includes only a QoS policy of the data flow transmitted by using the WLAN. If the CP determines that all data flow is transmitted by using 5G/eLTE RAN, the QoS policy includes only a QoS policy of the data flow transmitted by using the 5G/eLTE RAN.

To distinguish QoS policies of different types of access networks, one of the following manners or a combination of the following manners may be used:
(1) A parameter name/parameter type name includes an access network type. For example, the parameter name/parameter type name is a WLAN QoS policy (policy), a 5G QoS policy, an eLTE QoS policy, or the like. The WLAN QoS policy represents the QoS policy corresponding to the part of data flow transmitted by using the WLAN. Alternatively, the parameter name/parameter type name is a WLAN flow template(s), a 5G QoS policy, or an eLTE QoS policy. The WLAN flow template(s) represents the data flow template corresponding to the part of data flow transmitted by using the WLAN. Alternatively, the parameter name/parameter type name is a WLAN QoS parameter, a 5G QoS parameter, or an eLTE QoS parameter. The WLAN QoS parameter represents the QoS parameter corresponding to the data flow transmitted by using the WLAN.
(2) The QoS policy includes an access network type indication, to distinguish QoS policies of the WLAN, 5G, and eLTE.
3) The access network type indication is added to the flow template and/or the QoS parameter, to distinguish a data flow template and/or corresponding QoS parameter of data flows transmitted by using the WLAN, 5G, and eLTE.

After receiving the AN QoS setup message, the AN CCF determines, based on the first QoS policy and the information about the target access network that are in the message, data flows to be transmitted by using the WLAN, the 5G RAN and/or the eLTE RAN. For a data flow to be transmitted by using the WLAN, steps 407 to 410 are performed. For a data flow to be transmitted by using the 5G/eLTE RAN, steps 407a to 410a are performed.

407. If determining that the target access network is a WLAN, the AN CCF converts a first-type QoS parameter into a second-type QoS parameter matching the WLAN, and converts a first-type data flow template into a second-type data flow template matching the WLAN.

That is, a part or all of the first data flow is transmitted by using a WLAN. Therefore, for the data flow transmitted by using a WLAN, the AN CCF generates a WLAN data flow template, and converts the first-type QoS parameter that is in a received first QoS policy and that corresponds to the first data flow into a WLAN QoS parameter, that is, the second-type QoS parameter. Details are as follows:
(1) The WLAN data flow template may be a MAC (Medium Access Control, Medium Access Control protocol) address or a WLAN data flow identity. The AN CCF associates the WLAN-used data flow template with the first-type data flow template. The association table may be shown in Table 2, and details are not described herein again.
(2) The WLAN QoS parameter may be a WLAN QoS parameter stipulated in the IEEE 802.11e protocol/WMM protocol (WMM: Wi-Fi Multimedia, that is, the Wi-Fi multimedia protocol, which is a part of the IEEE 802.1 1e protocol). The AN converts the first-type QoS parameter into the WLAN QoS parameter, that is, the second-type QoS parameter. Specifically, mapping shown in Table 3 in the foregoing embodiment may be performed, and details are not described herein again.

408. The AN CCF sends a QoS request to the UE, where the QoS request includes information about the access network (which is the WLAN herein), the WLAN data flow template and the corresponding WLAN QoS parameter that are determined in step 407.

That is, the AN CCF sends the information about the target access network, the second-type QoS parameter, and the second-type data flow template to the UE. The information about the target access network may be identification information of an access network, or may be type information of a type of access networks, for example, a WLAN.

Specifically, (1) if the UE has established a WLAN connection to a WLAN AP, the AN CCF may send the QoS request to the WLAN AP, and the WLAN AP sends the QoS request to the UE.

Alternatively, (2) if the AN CCF has established a connection to the UE by using a 5G/eLTE RAN, the AN CCF may send the QoS request to the 5G/eLTE RAN, and the 5G/eLTE RAN sends the QoS request to the UE.

Alternatively, (3) if the AN CCF has not established a connection to the UE by using a 5G/eLTE RAN, the AN CCF may send the QoS request to the 5G/eLTE RAN, the 5G/eLTE RAN pages the UE, the UE responds to the paging and establishes a connection to the 5G/eLTE RAN, and then the 5G/eLTE RAN sends the QoS request to the UE.

It should be noted that regardless of whether the UE has established a WLAN connection to the WLAN AP, the foregoing manners (2) and (3) can be used. In this case, the AN CCF sends a corresponding QoS request to the WLAN, so that the WLAN prepares, according to the QoS request, a radio resource required for data flow transmission.

409. The UE sends a QoS response to the AN CCF, indicating that the UE accepts the QoS request.

410. The UE transmits a corresponding data flow by using the WLAN based on the WLAN data flow template and the WLAN QoS parameter, to control data transmission.

It should be noted that before step 410, if the UE has not established a WLAN connection to the WLAN AP, the UE first establishes a WLAN connection to the WLAN AP, and then transmits the corresponding data flow by using the WLAN based on the WLAN data flow template and the WLAN QoS parameter. Specifically, the UE identifies, based on the WLAN data flow template, a WLAN data flow corresponding to the WLAN data flow template, determines a priority, a bandwidth, an encoding/decoding manner, and the like of transmission of the data flow based on the WLAN QoS parameter such as a priority, a maximum rate, and a reliability parameter, and performs transmission.

411. The AN CCF replies AN QoS setup ack (response) to the CP, indicating that the AN CCF accepts a QoS requirement of the CP.

This step may alternatively be performed after step 304.

412. The UP replies CN QoS setup ack to the CP, indicating that the UP accepts the QoS requirement of the CP.

This step may also be performed after step 303.

For a data flow to be transmitted by using the 5G/eLTE RAN, steps 407 to 410 are replaced with steps 407a to 410a, which specifically includes the following steps.

407a. If determining that the target access network is a 5G/eLTE RAN, the AN CCF converts a first-type QoS parameter into a second-type QoS parameter matching the 5G/eLTE RAN, and converts a first-type data flow template into a second-type data flow template matching the WLAN.

That is, a part or all of the data flow is transmitted by using the 5G/eLTE RAN. Therefore, for a data flow transmitted by using the 5G/eLTE RAN, the AN CCF generates a 5G/eLTE radio access data flow template (5G/eLTE radio flow template), and converts the first-type QoS parameter that is in a received first QoS policy and that corresponds to the first data flow into a 5G/eLTE radio access QoS parameter, that is, the second-type QoS parameter. Details are as follows:
(1) Referring to Table 4 in the foregoing embodiment, the 5G/eLTE radio access data flow template may be a 5G/LTE radio bearer identity (radio bearer identity) or a 5G/LTE radio flow identity (radio flow identity). The AN CCF associates the 5G/eLTE radio access data flow template with the first-type data flow template.
(2) Referring to Table 5 in the foregoing embodiment, the 5G/eLTE radio access QoS parameter may be a 5G/LTE radio bearer QoS parameter or a 5G/LTE radio flow QoS parameter. The 5G/LTE radio bearer QoS parameter may also be referred to as a radio bearer service attribute (radio bearer service attribute). The 5G/LTE radio flow QoS parameter may also be referred to as a radio flow service attribute (radio flow service attribute). The AN CCF converts the received first-type QoS parameter of the first data flow into the 5G/eLTE RAN QoS parameter, that is, the second-type QoS parameter.

408a. The AN CCF sends a QoS request to the UE, where the QoS request includes the 5G/eLTE radio access data flow template and the corresponding 5G/eLTE radio access QoS parameter that are determined in step 309a.

That is, the AN CCF sends the information about the target access network, the second-type QoS parameter, and the second-type data flow template to the UE. The information about the target access network may be identification information of an access network, or may be type information of a type of access networks, for example, a WLAN.

Specifically, (1) if the AN CCF has established a connection to the UE by using a 5G/eLTE RAN, the AN CCF may send the QoS request to the 5G/eLTE RAN, and the 5G/eLTE RAN sends the QoS request to the UE.

Alternatively, (2) if the AN CCF has not established a connection to the UE by using a 5G/eLTE RAN, the AN CCF may send the QoS request to the 5G/eLTE RAN, the 5G/eLTE RAN pages the UE, the UE responds to the paging and establishes a connection to the 5G/eLTE RAN, and then the 5G/eLTE RAN sends the QoS request to the UE.

Alternatively, (3) if the AN CCF has not established a connection to the UE by using a 5G/eLTE RAN, but has established a connection to the UE in another manner (for example, a WLAN), the AN CCF may send the QoS request to the UE by using the established connection, and the UE establishes a connection to the 5G/eLTE RAN according to the QoS request. In this case, the AN CCF sends a corresponding QoS request to the 5G/eLTE RAN, so that the 5G/eLTE RAN prepares, according to the QoS request, a radio resource required for data flow transmission.

409a. The UE sends a QoS response to the AN CCF, indicating that the UE accepts the QoS request.

410a. The UE transmits a corresponding data flow based on the 5G/eLTE radio access data flow template and the 5G/eLTE radio access QoS parameter by using the 5G/eLTE RAN, to control data transmission.

Specifically, the UE identifies, based on the 5G/eLTE radio access data flow template, a corresponding data flow, determines a priority, a bandwidth, an encoding/decoding manner, and the like of transmission of the data flow based on the 5G/eLTE radio access QoS parameter such as a priority, a maximum rate, and a reliability parameter, and performs transmission.

During specific implementation, the 5G/eLTE processes an uplink data packet based on a radio access data flow template of the uplink data packet and a corresponding 5G/eLTE QoS parameter (that is, the second-type QoS parameter), and sends the uplink data packet to the UP based on an L3/L4 data flow template (that is, the first-type data flow template) corresponding to the uplink data packet. For a downlink data packet, the 5G/eLTE access network processes a downlink data packet based on an L3/L4 data flow template of the downlink data packet and a corresponding QoS parameter, and sends the downlink data packet to the UE based on a 5G/eLTE radio access data flow template corresponding to the downlink data packet.

Specifically, the uplink data packet and the downlink data packet may respectively use formats shown in Table 6 and Table 7 in the foregoing embodiment, and details are not described herein again.

According to the data transmission control method provided in this embodiment of the present invention, after the terminal accesses a wireless network, the core network device determines the first QoS policy, and determines the access network that is in the candidate access network and that supports the first QoS policy as the target access network. The first-type QoS parameter included in the first QoS policy is converted into the second-type QoS parameter matching the target access network, and the first-type data flow template is converted into the second-type data flow template matching the target access network. Finally, transmission of the first data flow can be controlled based on the second-type QoS parameter and the second-type data flow template. In the prior art, after the terminal sets up a session with a network side, the core network device determines a QoS policy. An access network used when the session is set up may not satisfy a requirement of the QoS policy, leading to poor service experience of a terminal user. Comparatively, in the present invention, an access network satisfying the QoS policy is selected based on the determined QoS policy. In this way, a QoS requirement of transmission of a data flow corresponding to a particular service can be satisfied while QoS is controlled, thereby improving service experience of the terminal.

### Embodiment 5:

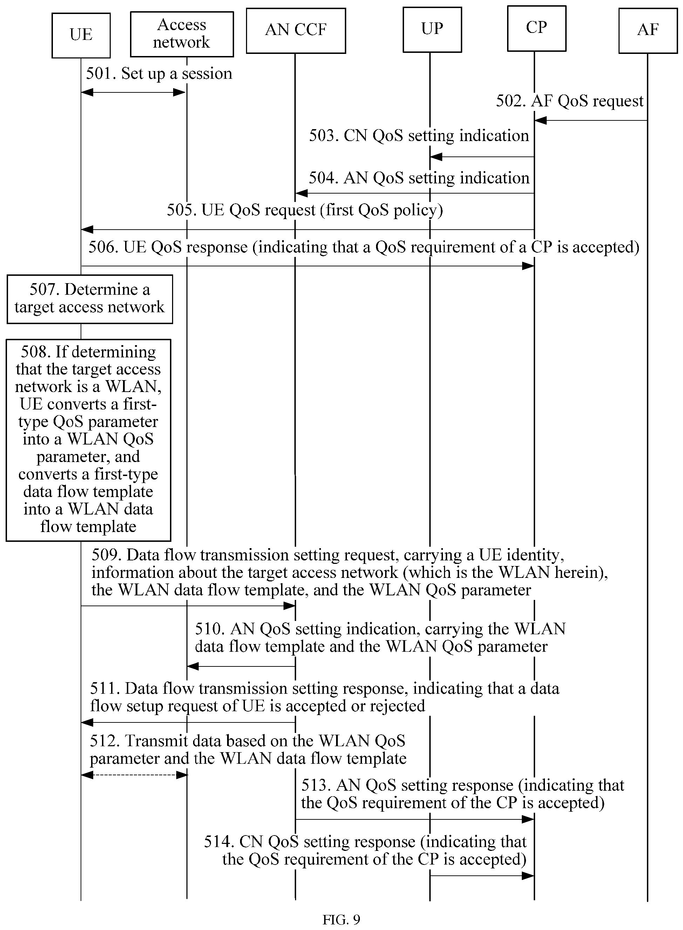

This embodiment of the present invention provides a data transmission control method, and an access network satisfying a QoS policy is determined based on a terminal. As shown in FIG. 9, the method specifically includes the following steps.

501. UE sets up a session with an access network.

During specific implementation, the UE accesses at least one of the following access networks: a 5G access network, an eLTE access network, and a WLAN access network.

502. An AF sends an AF QoS request (request) to a CP.

The AF QoS request includes description information of the session set up on the UE, for example, QoS information such as a packet filter (data packet filter) and flow bitrate (data flow bit rate) of a data flow included in the session.

503. The CP determines a first QoS policy based on a requirement of an operator, and sends a CN QoS request to a UP, where the CN QoS request includes the first QoS policy.

The first QoS policy is a series of QoS parameters required by a control core network, the access network, and the UE, and includes at least a first-type QoS parameter and a first-type data flow template. The first-type QoS parameter is a QoS parameter based on L3 and/or L4, and the first-type data flow template is a data flow template based on L3 and/or L4.

In addition, the UP may control transmission of data flows of the session (the session set up in step 301) based on a received QoS policy. For example, the data flows may be identified by using the first-type data flow template. It is determined based on priorities and/or delay requirements of the data flows that data packets of which data flows are transmitted at a higher priority, a transmission bandwidth is allocated based on a maximum bit rate of the data flows, and an encoding/decoding manner of the data flows is determined based on reliability parameters of the data flows.

504. The CP sends AN QoS setup (setting indication) to an AN CCF, where the AN QoS setup includes the first QoS policy.

It should be noted that the AN QoS setup message may include all content of the first QoS policy, or carry only a part of content of the first QoS policy.

Similarly, the AN may alternatively control transmission of data flows of the session based on a received QoS policy.

505. The CP sends a UE QoS request to the UE (User Equipment, User Equipment, or referred to as a terminal), where the UE QoS request includes the first QoS policy.

Similarly, the QoS policy in the UE QoS setup message may include all content of the first QoS policy, or carry only a part of content of the first QoS policy.

506. The UE replies a UE QoS response (response) to the CP, indicating that the UE accepts a QoS requirement of the CP.

507. The UE determines, based on the first QoS policy, a target access network used for transmitting a first data flow.

That is, after receiving the QoS request from the CP, the UE obtains the first QoS policy, and then the UE may determine, based on a first-type QoS parameter and information about a candidate access network that are included in the received first QoS policy, the target access network used for transmitting the first data flow. The information about the candidate access network includes at least one of the following: information about an access network that has been currently accessed by a terminal (UE), information about an access network that is currently accessible to the terminal, a type of an access network supported by the terminal, preconfigured access network selection policy information, and load information of a currently accessible access network.

"Has been accessed" herein means that the UE has established a connection to the access network. A load status of the access network may be whether the access network is overloaded.

Further, after determining the target access network, the UE may further generate an association table, where the association table records a correspondence between the first data flow and the target access network. Specifically, the flow template of the data flow is associated with (or referred to as bound to binding) the used access network. The association table may be shown in Table 1 in Embodiment 3, and details are not described herein again.

508. If determining that the target access network is a WLAN, the UE converts a first-type QoS parameter into a second-type QoS parameter matching the WLAN, and converts a first-type data flow template into a second-type data flow template matching the WLAN.

Specifically, for the data flow transmitted by using a WLAN, the UE generates a WLAN-used data flow template (that is, the second-type data flow template) for the data flow, and converts a first-type QoS parameter of the data flow into a WLAN QoS parameter (that is, the second-type QoS parameter).

Further, the WLAN-used data flow template may be a MAC (Medium Access Control, Medium Access Control protocol) address or a WLAN data flow identity. In addition, the UE may further associate the WLAN-used data flow template with the first-type data flow template. For a specific association example, refer to Table 2 in Embodiment 3.

The WLAN QoS parameter may be a WLAN QoS parameter stipulated in the IEEE 802.11e protocol/WMM protocol (WMM: Wi-Fi Multimedia, that is, the Wi-Fi multimedia protocol, which is a part of the IEEE 802.11e protocol). The UE may further convert the received first-type QoS parameter of the data flow into the WLAN QoS parameter, that is, the second-type QoS parameter. For specific conversion/mapping, refer to Table 3 in Embodiment 3, and details are not described herein again.

509. The UE sends a flow setup request (data flow transmission setting request) to the AN CCF, where the flow setup request carries a UE identity, information about the target access network (which is the WLAN herein), the second-type data flow template (which is a WLAN data flow template herein), and the second-type QoS parameter (which is a WLAN QoS parameter herein).

It should be noted that the flow setup request may further carry an L3/L4 data flow template corresponding to a data flow transmitted by using a WLAN, and a core network QoS parameter of the data flow transmitted by using the WLAN. Further, the L3/L4 data flow template herein may be a part of the first-type data flow template included in the first QoS policy, and the core network QoS parameter herein may be a part of the first-type QoS parameter included in the first QoS policy. That is, in this case, a part of the first data flow needs to be transmitted by using the WLAN.

510. The AN CCF sends AN QoS setup (setting indication) to an access node of the WLAN according to the received flow setup request.

The AN QoS setup carries the WLAN data flow template and the WLAN QoS parameter. During specific implementation, the AN CCF selects, based on the information that is about the target access network and that is carried in the received flow setup request, the access node of the target access network, which is the access node of the WLAN. In this way, the access node of the WLAN may prepare, based on the WLAN data flow template and the WLAN QoS parameter that are in the AN QoS setup, a resource required for data flow transmission. In addition, the access node of the WLAN sends an AN QoS setup ack message to the AN CCF.

Specifically, before sending the AN QoS setup message to the WLAN, the AN CCF may compare the first-type data flow template in the received first QoS policy with the L3/L4 data flow template in the flow setup request. If the latter one is a part or all of the former one, the AN CCF accepts a data flow setup request of the UE; otherwise, rejects a data flow setup request of the UE. Certainly, the first-type QoS parameter in the received first QoS policy may be compared with the core network QoS parameter in the flow setup request. If the latter one is a part or all of the former one, the AN CCF accepts a data flow setup request of the UE; otherwise, rejects a data flow setup request of the UE.

511. The AN CCF sends a flow setup response (data flow transmission setting response) to the UE, indicating that the AN CCF accepts or rejects the data flow setup request of the UE.

512. If the AN CCF accepts the data flow setup request of the UE on the WLAN, the UE transmits a corresponding data flow by using the WLAN based on the WLAN data flow template and the WLAN QoS parameter.

That is, the UE controls data transmission based on the second-type data flow template and the second-type QoS parameter. Specifically, the UE identifies a WLAN data flow corresponding to the WLAN data flow template, determines a priority, a bandwidth, an encoding/decoding manner, and the like of transmission of the data flow based on the WLAN QoS parameter such as a priority, a maximum rate, and a reliability parameter, and performs transmission.

Before step 511, if the UE has not established a WLAN connection to a WLAN AP, the UE first establishes a WLAN connection to the WLAN AP, and then transmits the corresponding data flow by using the WLAN based on the WLAN data flow template and the WLAN QoS parameter.

513. The AN CCF replies AN QoS setup ack (response) to the CP, indicating that the AN CCF accepts a QoS requirement of the CP.

514. The UP replies CN QoS setup ack to the CP, indicating that the UP accepts the QoS requirement of the CP.

In step 508 to 512 described above, the data transmission control method provided in this embodiment of the present invention is described by using an example in which the target access network is a WLAN. If the target access network is a 5G/eLTE RAN for example, steps 508 to 512 may be sequentially replaced with step 508a to 512a, which specifically includes the following steps.

508a. If determining that the target access network is a 5G/eLTE RAN, the UE converts a first-type QoS parameter into a second-type QoS parameter matching the 5G/eLTE RAN, and converts a first-type data flow template into a second-type data flow template matching the 5G/eLTE RAN.

Specifically, for a data flow transmitted by using a 5G/eLTE RAN, the UE generates a 5G/eLTE radio access data flow template - a 5G/eLTE radio flow template, that is, the second-type data flow template; and converts a first-type QoS parameter that corresponds to the data flow and that is in a received first QoS policy into a 5G/eLTE radio access QoS parameter, that is, the second-type QoS parameter. Details are as follows:
First, the 5G/eLTE radio access data flow template may be a 5G/LTE radio bearer identity (radio bearer identity) or a 5G/LTE radio flow identity (radio flow identity). The UE associates the 5G/eLTE radio access data flow template with the data flow template received in step 6. For a specific example of association, refer to Table 4 in Embodiment 3.

The 5G/eLTE radio access QoS parameter may be a 5G/LTE radio bearer QoS parameter (or referred to as a radio bearer service attribute, radio bearer service attribute) or a 5G/LTE radio flow QoS parameter (or referred to as a radio flow service attribute, radio flow service attribute). It should be noted that in this embodiment of the present invention, a media type of the data flow may be voice, video, and text.

Second, the UE converts a first QoS parameter that corresponds to the data flow and that is in the first QoS policy into the 5G/eLTE radio access QoS parameter. For specific conversion/mapping, refer to Table 5 in Embodiment 3.

509a. The UE sends a flow setup request to the AN CCF.

The flow setup request carries a UE identity, information about the target access network (which is the 5G/eLTE RAN herein), the second-type data flow template (which is the 5G/eLTE RAN data flow template herein), the second-type QoS parameter (which is the 5G/eLTE RAN QoS parameter), an L3/L4 data flow template corresponding to the data flow transmitted by using the 5G/eLTE RAN, and a core network QoS parameter corresponding to the data flow transmitted by using the 5G/eLTE RAN.

510a. The AN CCF sends AN QoS setup to the 5G/eLTE RAN based on the received flow setup request.

The AN QoS setup carries the 5G/eLTE RAN data flow template, the 5G/eLTE RAN QoS parameter, the L3/L4 data flow template of the data flow transmitted by using the 5G/eLTE RAN, and the core network QoS parameter of the data flow transmitted by using the 5G/eLTE RAN.

During specific implementation, the 5G/eLTE RAN may prepare, according to the AN QoS setup, a resource required for data flow transmission, and sends an AN QoS setup ack message to the AN CCF.

Specifically, before sending the AN QoS setup message to the 5G/eLTE RAN, the AN CCF may compare the first-type data flow template in the received first QoS policy with the L3/L4 data flow template in the flow setup request. If the latter one is a part or all of the former one, the AN CCF accepts a data flow setup request of the UE; otherwise, rejects a data flow setup request of the UE. Certainly, the first-type QoS parameter in the received first QoS policy may be compared with the core network QoS parameter in the flow setup request. If the latter one is a part or all of the former one, the AN CCF accepts a data flow setup request of the UE; otherwise, rejects a data flow setup request of the UE.

511a. The AN CCF sends a flow setup response to the UE, indicating that the AN CCF accepts or rejects the data flow setup request of the UE.

512a. If the AN CCF accepts the data flow setup request of the UE on the 5G/eLTE RAN, the UE transmits a corresponding data flow by using the 5G/eLTE RAN based on a 5G/eLTE RAN data flow template and a 5G/eLTE RAN QoS parameter.

Specifically, the UE identifies, based on the 5G/eLTE radio access data flow template, a corresponding data flow, determines a priority, a bandwidth, an encoding/decoding manner, and the like of transmission of the data flow based on the 5G/eLTE radio access QoS parameter such as a priority, a maximum rate, and a reliability parameter, and performs transmission.

For an uplink data packet, the 5G/eLTE access network processes the uplink data packet based on a radio access data flow template of the uplink data packet and a corresponding QoS parameter, and sends the uplink data packet to the UE based on an L3/L4 data flow template corresponding to the uplink data packet. For a downlink data packet, the 5G/eLTE access network processes a downlink data packet based on an L3/L4 data flow template of the downlink data packet and a corresponding QoS parameter, and sends the downlink data packet to the UE based on a 5G/eLTE radio access data flow template corresponding to the downlink data packet.

For examples of formats of the uplink data packet and the downlink data packet, refer to Table 6 and Table 7 in Embodiment 3, and details are not described herein again.

It should be noted that the UE may further add information about data flows transmitted by using the WLAN and the 5G/eLTE to a same flow setup request message. In other words, the flow setup request message carries the following information: (1) a UE identity; (2) a corresponding radio data flow template, a radio wireless QoS parameter, an L3/L4 data flow template, and a core network QoS parameter when an access network type = a 5G/eLTE RAN; and (3) a corresponding radio data flow template, a radio QoS parameter, an L3/L4 data flow template, and a core network QoS parameter when an access network type = a WLAN.

In this way, steps 512a and 512 may be combined, indicating that the AN CCF accepts the data flow setup requests of the UE on the WLAN or the 5G/eLTE RAN, or accepts one of the data flow setup requests, or rejects both data flow setup requests.

In a preferable implementation of the present invention, the UE directly requests to establish a connection to a selected access network node without use of the AN CCF. Specifically, steps 509 to 512 in the foregoing embodiment needs to be replaced with the following steps:
509*. If the UE has not established a WLAN connection to a WLAN AP, the UE establishes a WLAN connection to the WLAN AP, in other words, performs a WLAN association (association) process.

510*. The UE sends a flow setup request to the WLAN.

The flow setup request carries a UE identity, a WLAN data flow template, a WLAN QoS parameter, an L3/L4 data flow template of a data flow transmitted by using the WLAN, and a core network QoS parameter of a data flow transmitted by using the WLAN.

511*. The WLAN prepares, according to a received flow setup request, a resource required for data flow transmission, and sends a flow setup response message to the UE.

512*. The UE transmits a corresponding data flow by using the WLAN based on a WLAN data flow template and a WLAN QoS parameter.

Specifically, the UE identifies a WLAN data flow corresponding to the WLAN data flow template, determines a priority, a bandwidth, an encoding/decoding manner, and the like of transmission of the data flow based on the WLAN QoS parameter such as a priority, a maximum rate, and a reliability parameter, and performs transmission.

In step 509* to 512*, for example, the target access network is a WLAN. If the target access network is a 5G/eLTE RAN, steps 509a to 512a are replaced with steps 509a* to 511a*, which specifically includes the following steps.

509a*. The UE sends a flow setup request to a 5G/eLTE RAN.

The flow setup request carries a UE identity, a 5G/eLTE RAN data flow template, a 5G/eLTE RAN QoS parameter, an L3/L4 data flow template of a data flow transmitted by using the 5G/eLTE RAN, and a core network QoS parameter of a data flow transmitted by using the 5G/eLTE RAN.

510a*. The 5G/eLTE RAN prepares, according to a received flow setup request, a resource required for data flow transmission, and sends a flow setup response message to the UE.

511a*. The UE transmits a data flow based on a 5G/eLTE RAN data flow template and a 5G/eLTE RAN QoS parameter by using the 5G/eLTE RAN.

In addition, it should be noted that the terminal in this embodiment of the present invention may simultaneously access different access networks, and transmit data by using different access networks based on different QoS parameters and data flow templates. For example, target access networks determined by the terminal are A and B. The terminal may access A and transmit data by using the access network A based on a second-type data flow template matching the access network A and a second-type QoS parameter matching the access network A. In addition, the terminal may alternatively access B and transmit data by using the access network B based on a second-type data flow template matching the access network B and a second-type QoS parameter matching the access network B.

According to the data transmission control method provided in this embodiment of the present invention, after the terminal accesses a wireless network, the terminal obtains the first QoS policy of the first data flow, and determines the access network that is in the candidate access network and that supports the first QoS policy as the target access network. The first-type QoS parameter included in the first QoS policy is converted into the second-type QoS parameter matching the target access network, and the first-type data flow template is converted into the second-type data flow template matching the target access network. Finally, transmission of the first data flow can be controlled based on the second-type QoS parameter and the second-type data flow template. In the prior art, after the terminal sets up a session with a network side, the core network device determines a QoS policy. An access network used when the session is set up may not satisfy a requirement of the QoS policy, leading to poor service experience of a terminal user. Comparatively, in the present invention, an access network satisfying the QoS policy is selected based on the determined QoS policy. In this way, a QoS requirement of transmission of a data flow corresponding to a particular service can be satisfied while QoS is controlled, thereby improving service experience of the terminal.

### Embodiment 6:

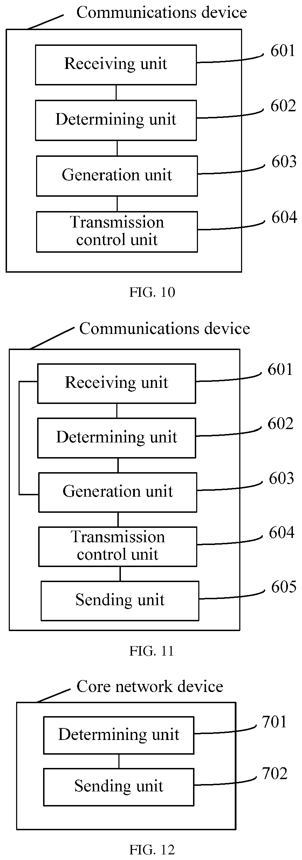

This embodiment of the present invention provides a communications device. As shown in FIG. 10, the communications device includes: a receiving unit 601, a determining unit 602, a generation unit 603, and a transmission control unit 604.

The receiving unit 601 is configured to: receive a QoS request sent by the core network device, and obtain a first QoS policy from the QoS request, where the QoS request carries the first QoS policy, and the first QoS policy includes a first-type data flow template and a first-type QoS parameter that correspond to a first data flow.

The determining unit 602 is configured to determine, based on the first-type QoS parameter and information about a candidate access network, an access network that is in the candidate access network and that supports the first QoS policy as a target access network, where the target access network is an access network used during transmission of the first data flow.

The generation unit 603 is configured to generate, based on the first-type QoS parameter, a second-type QoS parameter matching the target access network, and generate, based on the first-type data flow template, a second-type data flow template matching the target access network.

The transmission control unit 604 is configured to control transmission of the first data flow based on the second-type QoS parameter and the second-type data flow template.

It should be noted that the information about the candidate access network includes at least one of the following:
information about an access network that has been currently accessed by a terminal, information about an access network that is currently accessible to the terminal, a type of an access network supported by the terminal, preconfigured access network selection policy information, and load information of a currently accessible access network.

The determining unit 602 is specifically configured to: convert a service priority included in the first-type QoS parameter into a service priority matching the target access network, and convert service description information included in the first-type QoS parameter into service description information matching the target access network.

The second-type QoS parameter includes at least the service priority matching the target access network and the service description information matching the target access network.

The generation unit 603 is specifically configured to determine, based on a first-type address parameter and/or a first-type data flow identity that are/is included in the first-type data flow template, a second-type address parameter matching the target access network and/or a second-type data flow identity matching the target access network, where the first-type data flow template is a data flow template based on a layer 3 protocol and/or a layer 4 protocol.

The second-type data flow template includes at least the second-type address parameter and/or the second-type data flow identity; and the second-type data flow template is a data flow template based on a layer 2 protocol and/or a layer 1 protocol.

Herein, the first-type address parameter includes at least a first-type data flow source address and/or a first-type data flow destination address, and the second-type address parameter includes at least a second data flow source address and/or a second-type data flow destination address. Both the first-type data flow source address and the first-type data flow destination address are address parameters based on the layer 3 protocol and/or the layer 4 protocol. Both the second-type data flow source address and the second-type data flow destination address are address parameters based on the layer 2 protocol and/or the layer 1 protocol.

The generation unit 603 is further configured to: after the determining unit determines the access network that is in the candidate access network and that supports the first QoS policy as the target access network, generate an association table, where the association table records a correspondence between the first data flow and the target access network.

If the communications device is an access network device, the transmission control unit 604 is configured to: send the second-type QoS parameter, the second-type data flow template, and information about the target access network to the terminal, so that the terminal controls transmission of the first data flow based on the second-type QoS parameter and the second-type data flow template; and/or
send the second-type QoS parameter and the second-type data flow template to an access node of the target access network, so that the access node of the target access network controls transmission of the first data flow based on the second-type QoS parameter and the second-type data flow template.

As shown in FIG. 11, the communications device further includes a sending unit 605. If there is no access network that is in the candidate access network and that supports the first QoS policy,

the sending unit 605 is configured to send a QoS request failure indication to the core network device.

The receiving unit 601 is configured to receive a QoS update request sent by the core network device, where the QoS update request carries a second QoS policy.

The determining unit 602 is configured to determine, based on the second QoS policy and the information about the candidate access network, an access network that is in the candidate access network and that supports the second QoS policy as an updated target access network.

The generation unit 603 is configured to generate a third-type QoS parameter and a third-type data flow template, where the third-type QoS parameter and the third-type data flow template match the updated target access network.

The sending unit 605 is further configured to send the third-type QoS parameter and the third-type data flow template to the terminal, and send the third-type QoS parameter and the third-type data flow template to an access node of the updated target access network, so that the terminal and the access node of the updated target access network control transmission of the first data flow.

If the communications device is the terminal, the transmission control unit 604 is specifically configured to: establish a data flow transmission connection to an access node of the target access network, and transmit the first data flow by using the data flow transmission connection based on the second-type QoS parameter and the second-type data flow template.

The sending unit 605 is configured to: send the second-type QoS parameter, the second-type data flow template, and information about the target access network to an access network device, and establish the data flow transmission connection to the access node of the target access network under control of the access network device; or
send the second-type QoS parameter and the second-type data flow template to the access node of the target access network, and establish the data flow transmission connection to the access node of the target access network.

It should be noted that the sending unit in this embodiment may be a transmitter of the communications device; the receiving unit may be a receiver of the communications device, and the transmitter may be integrated into a transceiver with the receiver. In addition, the determining unit, the generation unit, and the transmission control unit may be separately configured processors, or may be integrated into a processor of the communications device during implementation. In addition, the determining unit, the generation unit, and the transmission control unit may be stored in a memory of the communications device in a form of program code and invoked by a processor of the communications device, to perform functions of the determining unit, the generation unit, and the transmission control unit. The processor herein may be a central processing unit (Central Processing Unit, CPU), or an application-specific integrated circuit (Application Specific Integrated Circuit, ASIC).

According to the communications device provided in this embodiment of the present invention, after accessing a wireless network, the terminal obtains the first QoS policy of the first data flow, and determines the access network that is in the candidate access network and that supports the first QoS policy as the target access network. The first-type QoS parameter included in the first QoS policy is converted into the second-type QoS parameter matching the target access network, and the first-type data flow template is converted into the second-type data flow template matching the target access network. Finally, transmission of the first data flow can be controlled based on the second-type QoS parameter and the second-type data flow template. In the prior art, after the terminal sets up a session with a network side, the core network device determines a QoS policy. An access network used when the session is set up may not satisfy a requirement of the QoS policy, leading to poor service experience of a terminal user. Comparatively, in the present invention, an access network satisfying the QoS policy is selected based on the determined QoS policy. In this way, a QoS requirement of transmission of a data flow corresponding to a particular service can be satisfied while QoS is controlled, thereby improving service experience of the terminal.

### Embodiment 7:

This embodiment of the present invention provides a core network device. As shown in FIG. 12, the core network device includes a determining unit 701 and a sending unit 702.

The determining unit 701 is configured to determine a first QoS policy of a first data flow, where the first QoS policy includes a first-type data flow template and a first-type QoS parameter that correspond to the first data flow.

The determining unit 701 is further configured to determine, based on the first-type QoS parameter and information about a candidate access network, an access network that is in the candidate access network and that supports the first QoS policy as a target access network.

The sending unit 702 is configured to send the first-type data flow template, the first-type QoS parameter, and information about the target access network to an access network device, so that the access network device determines a second-type data flow template and a second-type QoS parameter that match the target access network, and controls data transmission based on the second-type data flow template and the second-type QoS parameter.

The second-type QoS parameter includes at least a service priority matching the target access network and service description information matching the target access network; the second-type data flow template includes at least the second-type address parameter and/or the second-type data flow identity; the first-type data flow template is a data flow template based on a layer 3 protocol and/or a layer 4 protocol; and the second-type data flow template is a data flow template based on a layer 2 protocol and/or a layer 1 protocol.

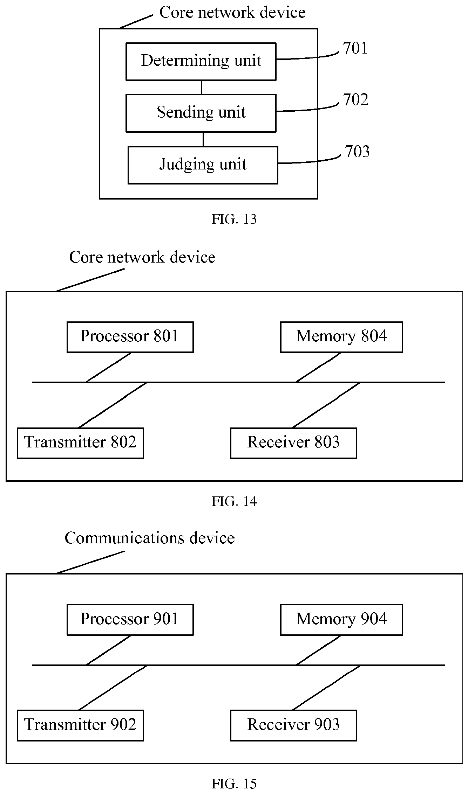

As shown in FIG. 13, the core network device further includes a judging unit 703.

The judging unit 703 is configured to: if there is no access network that is in the candidate access network and that supports the first QoS policy, determine whether a service corresponding to the first data flow is a service whose QoS requirement is allowed to be lowered.

The determining unit 701 is further configured to: if the service corresponding to the first data flow is a service whose QoS requirement is allowed to be lowered, determine a second QoS policy; and determine an access network that is in the candidate access network and that supports the second QoS policy as an updated target access network, where the second QoS policy includes the first-type data flow template and an updated second-type QoS parameter.

The sending unit 702 is further configured to send the first-type data flow template, the updated first-type QoS parameter, and information about the updated target access network to the access network device, so that the access network device determines a third-type data flow template and a third-type QoS parameter that match the updated target access network, and controls data transmission based on the third-type data flow template and the third-type QoS parameter.

It should be noted that the information about the candidate access network includes at least one of the following:
information about an access network that has been currently accessed by the terminal, information about an access network that is currently accessible to the terminal, a type of an access network supported by the terminal, preconfigured access network selection policy information, and load information of a currently accessible access network.

In addition, the sending unit in this embodiment may be a transmitter of a radio access network device; and the transmitter may be integrated into a transceiver with a receiver. In addition, the determining unit and the judging unit may be separately configured processors, or may be integrated into a processor of the radio access network device during implementation. In addition, the determining unit and the judging unit may be stored in a memory of the radio access network device in a form of program code and invoked by a processor of the radio access network device, to perform functions of the determining unit and the judging unit. The processor herein may be a central processing unit (Central Processing Unit, CPU), or an application-specific integrated circuit (Application Specific Integrated Circuit, ASIC).

According to the communications device provided in this embodiment of the present invention, after accessing a wireless network, the terminal determines the first QoS policy of the first data flow, and determines the access network that is in the candidate access network and that supports the first QoS policy as the target access network. The first-type QoS parameter included in the first QoS policy is converted into the second-type QoS parameter matching the target access network, and the first-type data flow template is converted into the second-type data flow template matching the target access network. Finally, transmission of the first data flow can be controlled based on the second-type QoS parameter and the second-type data flow template. In the prior art, after the terminal sets up a session with a network side, the core network device determines a QoS policy. An access network used when the session is set up may not satisfy a requirement of the QoS policy, leading to poor service experience of a terminal user. Comparatively, in the present invention, an access network satisfying the QoS policy is selected based on the determined QoS policy. In this way, a QoS requirement of transmission of a data flow corresponding to a particular service can be satisfied while QoS is controlled, thereby improving service experience of the terminal.

### Embodiment 8:

This embodiment of the present invention provides a core network device. As shown in FIG. 13, the core network device includes a processor 801, a transmitter 802, a receiver 803, and a memory 804.

The processor 801 may be a central processing unit (English: Central Processing Unit, CPU for short).

The memory 804 is configured to: store program code and transmit the program code to the processor 801, so that the processor 801 executes the following instructions according to the program code. The memory 804 may include a volatile memory (English: volatile memory), for example, a random-access memory (English: random-access memory, RAM for short); the memory 804 may alternatively include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). The memory 804 may alternatively include a combination of the foregoing memories.

The transmitter 802 may be implemented by an optical transmitter, an electric transmitter, a wireless transmitter, or any combination thereof. For example, the optical transmitter may be a small form-factor pluggable (English: small form-factor pluggable transceiver, SFP for short) transmitter (English: transceiver), an enhanced small form-factor pluggable (English: enhanced small form-factor pluggable, SFP+ for short) transmitter, or a 10-Gigabit small form-factor pluggable (English: 10 Gigabit small form-factor pluggable, XFP for short) transmitter. The electric transmitter may be an Ethernet (English: Ethernet) network interface controller (English: network interface controller, NIC for short). The wireless transmitter may be a wireless network interface controller (English: wireless network interface controller, WNIC for short).

The receiver 803 may be implemented by an optical receiver, an electric receiver, a wireless receiver, or any combination thereof. For example, the optical receiver may be small form-factor pluggable receiver, an enhanced small form-factor pluggable receiver, or a 10-Gigabit small form-factor pluggable receiver. The electric receiver may be an Ethernet network interface controller. The wireless receiver may be a wireless network interface controller.

The processor 801 is configured to: determine a first QoS policy of a first data flow, where the first QoS policy includes a first-type data flow template and a first-type QoS parameter that correspond to the first data flow, determine, based on the first-type QoS parameter and information about a candidate access network, an access network that is in the candidate access network and that supports the first QoS policy as a target access network.

The transmitter 802 is configured to send the first-type data flow template, the first-type QoS parameter, and information about the target access network to an access network device, so that the access network device determines a second-type data flow template and a second-type QoS parameter that match the target access network, and controls data transmission based on the second-type data flow template and the second-type QoS parameter.

The second-type QoS parameter includes at least a service priority matching the target access network and service description information matching the target access network; the second-type data flow template includes at least the second-type address parameter and/or the second-type data flow identity; the first-type data flow template is a data flow template based on a layer 3 protocol and/or a layer 4 protocol; and the second-type data flow template is a data flow template based on a layer 2 protocol and/or a layer 1 protocol.

The processor 801 is configured to: if there is no access network that is in the candidate access network and that supports the first QoS policy, determine whether a service corresponding to the first data flow is a service whose QoS requirement is allowed to be lowered.

The processor 801 is further configured to: if the service corresponding to the first data flow is a service whose QoS requirement is allowed to be lowered, determine a second QoS policy; and determine an access network that is in the candidate access network and that supports the second QoS policy as an updated target access network, where the second QoS policy includes the first-type data flow template and an updated second-type QoS parameter.

The transmitter 802 is further configured to send the first-type data flow template, the updated first-type QoS parameter, and information about the updated target access network to the access network device, so that the access network device determines a third-type data flow template and a third-type QoS parameter that match the updated target access network, and controls data transmission based on the third-type data flow template and the third-type QoS parameter.

It should be noted that the information about the candidate access network includes at least one of the following:
information about an access network that has been currently accessed by the terminal, information about an access network that is currently accessible to the terminal, a type of an access network supported by the terminal, preconfigured access network selection policy information, and load information of a currently accessible access network.

According to the core network device provided in this embodiment of the present invention, after accessing a wireless network, the terminal obtains the first QoS policy of the first data flow, and determines the access network that is in the candidate access network and that supports the first QoS policy as the target access network. The first-type QoS parameter included in the first QoS policy is converted into the second-type QoS parameter matching the target access network, and the first-type data flow template is converted into the second-type data flow template matching the target access network. Finally, transmission of the first data flow can be controlled based on the second-type QoS parameter and the second-type data flow template. In the prior art, after the terminal sets up a session with a network side, the core network device determines a QoS policy. An access network used when the session is set up may not satisfy a requirement of the QoS policy, leading to poor service experience of a terminal user. Comparatively, in the present invention, an access network satisfying the QoS policy is selected based on the determined QoS policy. In this way, a QoS requirement of transmission of a data flow corresponding to a particular service can be satisfied while QoS is controlled, thereby improving service experience of the terminal.

### Embodiment 9:

This embodiment of the present invention provides a communications device. As shown in FIG. 14, the communications device includes a processor 901, a transmitter 902, a receiver 903, and a memory 904.

The receiving unit 903 is configured to receive a QoS request sent by the core network device, and obtain the first QoS policy from the QoS request, where the QoS request carries the first QoS policy, and the first QoS policy includes a first-type data flow template and a first-type QoS parameter that correspond to a first data flow.

The processor 901 is configured to determine, based on the first-type QoS parameter and information about a candidate access network, an access network that is in the candidate access network and that supports the first QoS policy as a target access network, where the target access network is an access network used during transmission of the first data flow.

The processor 901 is configured to generate, based on the first-type QoS parameter, a second-type QoS parameter matching the target access network, and generate, based on the first-type data flow template, a second-type data flow template matching the target access network.

The processor 901 is configured to control transmission of the first data flow based on the second-type QoS parameter and the second-type data flow template.

It should be noted that the information about the candidate access network includes at least one of the following:
information about an access network that has been currently accessed by a terminal, information about an access network that is currently accessible to the terminal, a type of an access network supported by the terminal, preconfigured access network selection policy information, and load information of a currently accessible access network.

The processor 901 is specifically configured to: convert a service priority included in the first-type QoS parameter into a service priority matching the target access network, and convert service description information included in the first-type QoS parameter into service description information matching the target access network.

The second-type QoS parameter includes at least the service priority matching the target access network and the service description information matching the target access network.

The processor 901 is specifically configured to determine, based on a first-type address parameter and/or a first-type data flow identity that are/is included in the first-type data flow template, a second-type address parameter matching the target access network and/or a second-type data flow identity matching the target access network, where the first-type data flow template is a data flow template based on a layer 3 protocol and/or a layer 4 protocol.

The second-type data flow template includes at least the second-type address parameter and/or the second-type data flow identity; and the second-type data flow template is a data flow template based on a layer 2 protocol and/or a layer 1 protocol.

The first-type address parameter includes at least a first-type data flow source address and/or a first-type data flow destination address, and the second-type address parameter includes at least a second data flow source address and/or a second-type data flow destination address. Both the first-type data flow source address and the first-type data flow destination address are address parameters based on the layer 3 protocol and/or the layer 4 protocol. Both the second-type data flow source address and the second-type data flow destination address are address parameters based on the layer 2 protocol and/or the layer 1 protocol.

The processor 901 is further configured to: after determining the access network that is in the candidate access network and that supports the first QoS policy as the target access network, generate an association table, where the association table records a correspondence between the first data flow and the target access network.

If the communications device is an access network device, the processor 901 is configured to: send the second-type QoS parameter, the second-type data flow template, and information about the target access network to the terminal by using the transmitter 902, so that the terminal controls transmission of the first data flow based on the second-type QoS parameter and the second-type data flow template; and/or
send the second-type QoS parameter and the second-type data flow template to an access node of the target access network, so that the access node of the target access network controls transmission of the first data flow based on the second-type QoS parameter and the second-type data flow template.

If there is no access network that is in the candidate access network and that supports the first QoS policy, the transmitter 902 is configured to send a QoS request failure indication to the core network device.

The receiver 903 is configured to receive a QoS update request sent by the core network device, where the QoS update request carries a second QoS policy.

The processor 901 is configured to determine, based on the second QoS policy and the information about the candidate access network, an access network that is in the candidate access network and that supports the second QoS policy as an updated target access network.

The processor 901 is configured to generate a third-type QoS parameter and a third-type data flow template, where the third-type QoS parameter and the third-type data flow template match the updated target access network.

The transmitter 902 is further configured to send the third-type QoS parameter and the third-type data flow template to the terminal, and send the third-type QoS parameter and the third-type data flow template to an access node of the updated target access network, so that the terminal and the access node of the updated target access network control transmission of the first data flow.

If the communications device is the terminal, the processor 901 is specifically configured to: establish a data flow transmission connection to an access node of the target access network, and transmit the first data flow by using the data flow transmission connection based on the second-type QoS parameter and the second-type data flow template.

The transmitter 902 is configured to: send the second-type QoS parameter, the second-type data flow template, and information about the target access network to an access network device, and establish the data flow transmission connection to the access node of the target access network under control of the access network device; or
send the second-type QoS parameter and the second-type data flow template to the access node of the target access network, and establish the data flow transmission connection to the access node of the target access network.

According to the communications device provided in this embodiment of the present invention, after accessing a wireless network, the terminal obtains the first QoS policy of the first data flow, and determines the access network that is in the candidate access network and that supports the first QoS policy as the target access network. The first-type QoS parameter included in the first QoS policy is converted into the second-type QoS parameter matching the target access network, and the first-type data flow template is converted into the second-type data flow template matching the target access network. Finally, transmission of the first data flow can be controlled based on the second-type QoS parameter and the second-type data flow template. In the prior art, after the terminal sets up a session with a network side, the core network device determines a QoS policy. An access network used when the session is set up may not satisfy a requirement of the QoS policy, leading to poor service experience of a terminal user. Comparatively, in the present invention, an access network satisfying the QoS policy is selected based on the determined QoS policy. In this way, a QoS requirement of transmission of a data flow corresponding to a particular service can be satisfied while QoS is controlled, thereby improving service experience of the terminal.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or part of the functions described above. For a detailed working process of the foregoing apparatus, refer to a corresponding process in the foregoing method embodiments, and details are not further described herein.

The units described as separate parts may or may not be physically separate, and parts displayed as units may be one or more physical units, may be located in one place, or may be distributed on different places. Some or all of the units may be selected according to actual needs to achieve the objectives of the solutions of the embodiments. In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the present invention essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission control method performed by an access network device, the method comprising:
• receiving a quality of service, QoS, request sent by a core network device, and obtaining a first QoS policy from the QoS request, wherein the QoS request carries the first QoS policy, and the first QoS policy comprises a first-type data flow template and a first-type QoS parameter that correspond to a first data flow (step 101);
• determining, based on the first-type QoS parameter and information about a plurality of candidate access networks, whether there is an access network among the plurality of candidate access networks that supports the first QoS policy (step 102);
• in case there is the candidate access network among the plurality of candidate access networks that supports the first QoS policy, performing the following steps:
∘ determining the access network as a target access network, wherein the target access network is an access network used during transmission of the first data flow;
∘ generating, based on the first-type QoS parameter, a second-type QoS parameter matching the target access network, and generating, based on the first-type data flow template, a second-type data flow template matching the target access network (step 103);
∘ controlling transmission of the first data flow based on the second-type QoS parameter and the second-type data flow template (step 104), wherein the controlling the transmission of the first data flow based on the second-type QoS parameter and the second-type data flow template specifically comprises:
▪ sending the second-type QoS parameter, the second-type data flow template, and information about the target access network to the terminal;
▪ sending the second-type QoS parameter and the second-type data flow template to an access node of the target access network,
• in case there is no candidate access network among the plurality of candidate access networks that supports the first QoS policy, performing the following steps:
∘ sending a QoS request failure indication to the core network device;
∘ receiving a QoS update request sent by the core network device, wherein the QoS update request carries a second QoS policy;
∘ determining, based on the second QoS policy and the information about the plurality of candidate access networks, an access network among the plurality of candidate access networks that supports the second QoS policy as an updated target access network;
∘ generating a third-type QoS parameter and a third-type data flow template, wherein the third-type QoS parameter and the third-type data flow template match the updated target access network;
∘ sending the third-type QoS parameter and the third-type data flow template to the terminal, and
∘ sending the third-type QoS parameter and the third-type data flow template to an access node of the updated target access network.

2. The method according to claim 1, wherein the information about the plurality of candidate access networks comprises at least one of the following:
information about an access network that has been currently accessed by a terminal, information about an access network that is currently accessible to the terminal, a type of an access network supported by the terminal, preconfigured access network selection policy information, and load information of an access network that is currently accessible to the terminal.

3. The method according to claim 1 or 2, wherein the generating, based on the first-type QoS parameter, the second-type QoS parameter matching the target access network specifically comprises:
converting a service priority comprised in the first-type QoS parameter into a service priority matching the target access network, and converting service description information comprised in the first-type QoS parameter into service description information matching the target access network, wherein
the second-type QoS parameter comprises at least the service priority matching the target access network and the service description information matching the target access network.

4. The method according to claim 1 or 2, wherein the generating, based on the first-type data flow template, the second-type data flow template matching the target access network specifically comprises:
determining, based on a first-type address parameter and/or a first-type data flow identity that are/is comprised in the first-type data flow template, a second-type address parameter matching the target access network and/or a second-type data flow identity matching the target access network, wherein the first-type data flow template is a data flow template based on a layer 3 protocol and/or a layer 4 protocol; and
the second-type data flow template comprises at least the second-type address parameter and/or the second-type data flow identity; and the second-type data flow template is a data flow template based on a layer 2 protocol and/or a layer 1 protocol.

5. The method according to claim 4, wherein the first-type address parameter comprises at least a first-type data flow source address and/or a first-type data flow destination address, and the second-type address parameter comprises at least a second data flow source address and/or a second-type data flow destination address; and both the first-type data flow source address and the first-type data flow destination address are address parameters based on the layer 3 protocol and/or the layer 4 protocol; and both the second-type data flow source address and the second-type data flow destination address are address parameters based on the layer 2 protocol and/or the layer 1 protocol.

6. The method according to any one of claims 1 to 5, wherein after the determining the access network among the plurality of candidate access networks and that supports the first QoS policy as the target access network, the method further comprises:
generating an association table, wherein the association table records a correspondence between the first data flow and the target access network.

7. An access network device configured to perform any of the methods according to claims 1 - 6.

## Patentansprüche

1. Verfahren zum Steuern einer Datenübertragung, das durch eine Zugangsnetzwerkvorrichtung ausgeführt wird, wobei das Verfahren umfasst:
• Empfangen einer Dienstgüteanfrage (Quality of Service request, QoS-Anfrage), die von einer Kernnetzwerkvorrichtung gesendet wird, und Erhalten einer ersten QoS-Richtlinie aus der QoS-Anfrage, wobei die QoS-Anfrage die erste QoS-Richtlinie mitführt, und wobei die erste QoS-Richtlinie eine Datenstromvorlage eines ersten Typs und einen QoS-Parameter eines ersten Typs umfasst, die einem ersten Datenstrom entsprechen (Schritt 101);
• Ermitteln, aufgrund des QoS-Parameters des ersten Typs und aufgrund von Information über eine Vielzahl von Kandidatenzugangsnetzwerken, ob in der Vielzahl von Kandidatenzugangsnetzwerken ein Zugangsnetzwerk vorhanden ist, das die erste QoS-Richtlinie unterstützt (Schritt 102);
• in einem Fall, in dem in der Vielzahl von Kandidatenzugangsnetzwerken das Kandidatenzugangsnetzwerk vorhanden ist, das die erste QoS-Richtlinie unterstützt, Ausführen der folgenden Schritte:
∘ Ermitteln des Zugangsnetzwerks als ein Zielzugangsnetzwerk, wobei das Zielzugangsnetzwerk ein Zugangsnetzwerk ist, das während der Übertragung des ersten Datenstroms verwendet wird;
∘ Erzeugen, aufgrund des QoS-Parameters des ersten Typs, eines QoS-Parameters eines zweiten Typs, der auf das Zielzugangsnetzwerk abgestimmt ist, und Erzeugen, aufgrund der Datenstromvorlage des ersten Typs, einer Datenstromvorlage eines zweiten Typs, die auf das Zielzugangsnetzwerk abgestimmt ist (Schritt 103);
∘ Steuern einer Übertragung des ersten Datenstroms aufgrund des QoS-Parameters des zweiten Typs und der Datenstromvorlage des zweiten Typs (Schritt 104), wobei das Steuern der Übertragung des ersten Datenstroms aufgrund des QoS-Parameters des zweiten Typs und der Datenstromvorlage des zweiten Typs umfasst:
▪ Senden des QoS-Parameters des zweiten Typs, der Datenstromvorlage des zweiten Typs und von Informationen über das Zielzugangsnetzwerk an das Endgerät;
▪ Senden des QoS-Parameters des zweiten Typs und der Datenstromvorlage des zweiten Typs an einen Zugangsknoten des Zielzugangsnetzwerks;
• in einem Fall, in dem in der Vielzahl von Kandidatenzugangsnetzwerken kein Zugangsnetzwerk vorhanden ist, das die erste QoS-Richtlinie unterstützt, Ausführen der folgenden Schritte:
∘ Senden einer Fehleranzeige für die QoS-Anfrage an die Kernnetzwerkvorrichtung;
∘ Empfangen einer QoS-Aktualisierungsanfrage, die von der Kernnetzwerkvorrichtung gesendet wird, wobei die QoS-Aktualisierungsanfrage eine zweite QoS-Richtlinie mitführt;
∘ Ermitteln, aufgrund der zweiten QoS-Richtlinie und aufgrund der Information über die Vielzahl von Kandidatenzugangsnetzwerken, eines Zugangsnetzwerks in der Vielzahl von Kandidatenzugangsnetzwerken, das die zweite QoS-Richtlinie unterstützt, als ein aktualisiertes Zielzugangsnetzwerk;
∘ Erzeugen eines QoS-Parameters eines dritten Typs und einer Datenstromvorlage eines dritten Typs, wobei der QoS-Parameter des dritten Typs und die Datenstromvorlage des dritten Typs auf das aktualisierte Zielzugangsnetzwerk abgestimmt sind;
∘ Senden des QoS-Parameters des dritten Typs und der Datenstromvorlage des dritten Typs an das Endgerät; und
∘ Senden des QoS-Parameters des dritten Typs und der Datenstromvorlage des dritten Typs an einen Zugangsknoten des aktualisierten Zielzugangsnetzwerks.

2. Verfahren nach Anspruch 1, wobei die Informationen über die Vielzahl von Kandidatenzugangsnetzwerken mindestens eine der folgenden umfassen:
Informationen über ein Zugangsnetzwerk, auf welche das Endgerät aktuell zugegriffen hat, Informationen über ein Zugangsnetzwerk, das aktuell für das Endgerät zugänglich ist, einen Typ eines Zugangsnetzwerks, der von dem Endgerät unterstützt wird, vorkonfigurierte Richtlinieninformationen über eine Zugangsnetzwerkauswahl, und Auslastungsinformationen eines Zugangsnetzwerks, das aktuell für das Endgerät zugänglich ist.

3. Verfahren nach Anspruch 1 oder 2, wobei das Erzeugen, aufgrund des QoS-Parameters des ersten Typs, des QoS-Parameters des zweiten Typs, der auf das Zielzugangsnetzwerk abgestimmt ist, insbesondere umfasst:
Umwandeln einer Dienstpriorität, die in dem QoS-Parameter des ersten Typs enthalten ist, in eine Dienstpriorität, die auf das Zielzugangsnetzwerk abgestimmt ist, und Umwandeln von Dienstbeschreibungsinformationen, die in dem QoS-Parameter des ersten Typs enthalten sind, in Dienstbeschreibungsinformationen, die auf das Zielzugangsnetzwerk abgestimmt sind, wobei
der QoS-Parameter des zweiten Typs mindestens die Dienstpriorität, die auf das Zielzugangsnetzwerk abgestimmt ist, und die Dienstbeschreibungsinformationen umfasst, die auf das Zielzugangsnetzwerk abgestimmt sind.

4. Verfahren nach Anspruch 1 oder 2, wobei das Erzeugen, aufgrund der Datenstromvorlage des ersten Typs, der Datenstromvorlage des zweiten Typs, die auf das Zielzugangsnetzwerk abgestimmt ist, insbesondere umfasst:
Ermitteln, aufgrund eines Adressparameters eines ersten Typs und/oder einer Datenstromkennung eines ersten Typs, der und/oder die in der Datenstromvorlage des ersten Typs enthalten sind, eines Adressparameters eines zweiten Typs, der auf das Zielzugangsnetzwerk abgestimmt ist, und/oder einer Datenstromkennung eines zweiten Typs, die auf das Zielzugangsnetzwerk abgestimmt ist, wobei die Datenstromvorlage des ersten Typs eine Datenstromvorlage ist, die auf einem Schicht-3-Protokoll und/oder einem Schicht-4-Protokoll beruht; und
wobei die Datenstromvorlage des zweiten Typs mindestens den Adressparameter des zweiten Typs und/oder die Datenstromkennung des zweiten Typs umfasst, und wobei die Datenstromvorlage des zweiten Typs eine Datenstromvorlage ist, die auf einem Schicht-2-Protokoll und/oder einem Schicht-1-Protokoll beruht.

5. Verfahren nach Anspruch 4, wobei der Adressparameter des ersten Typs mindestens eine Datenstromquelladresse eines ersten Typs und/oder eine Datenstromzieladresse eines ersten Typs umfasst, und wobei der Adressparameter des zweiten Typs mindestens eine Datenstromquelladresse eines zweiten Typs und/oder eine Datenstromzieladresse eines zweiten Typs umfasst; und wobei sowohl die Datenstromquelladresse des ersten Typs als auch die Datenstromzieladresse des ersten Typs Adressparameter sind, die auf einem Schicht-3-Protokoll und/oder dem Schicht-4-Protokoll beruhen; und wobei sowohl die Datenstromquelladresse des zweiten Typs als auch die Datenstromzieladresse des zweiten Typs Adressparameter sind, die auf einem Schicht-2-Protokoll und/oder einem Schicht-1-Protokoll beruhen.

6. Verfahren nach einem der Ansprüche 1 bis 5, wobei das Verfahren nach dem Ermitteln aus der Vielzahl von Kandidatenzugangsnetzwerken des Zugangsnetzwerks, das die erste QoS-Richtlinie unterstützt, als das Zielzugangsnetzwerk, außerdem umfasst:
Erzeugen einer Zuordnungstabelle, wobei die Zuordnungstabelle eine Entsprechung zwischen dem ersten Datenstrom und dem Zielzugangsnetzwerk aufzeichnet.

7. Zugangsnetzwerkvorrichtung, die konfiguriert ist zum Ausführen eines der Verfahren nach einem der Ansprüche 1 bis 6.

## Revendications

1. Procédé de contrôle de transmission de données réalisé par un dispositif de réseau d'accès, le procédé comprenant les étapes consistant à :
recevoir une demande de qualité de service (QoS), envoyée par un dispositif de réseau central, et obtenir une première stratégie QoS à partir de la demande QoS, la demande QoS transportant la première stratégie QoS et la première stratégie QoS comprenant un modèle de flux de données d'un premier type et un paramètre QoS d'un premier type, qui correspondent à un premier flux de données (étape 101) ;
déterminer, sur la base du paramètre QoS d'un premier type et d'une information concernant une pluralité de réseaux d'accès candidats, s'il y a un réseau d'accès, parmi la pluralité de réseaux d'accès candidats, qui prend en charge la première stratégie QoS (étape 102) ;
s'il y a le réseau d'accès candidat, parmi la pluralité de réseaux d'accès candidats, qui prend en charge la première stratégie QoS, réaliser les étapes suivantes :
déterminer le réseau d'accès en guise de réseau d'accès cible, le réseau d'accès cible étant un réseau d'accès utilisé pendant la transmission du premier flux de données ;
générer, sur la base du paramètre QoS d'un premier type, un paramètre QoS d'un deuxième type qui concorde avec le réseau d'accès cible et générer, sur la base du modèle de flux de données d'un premier type, un modèle de flux de données d'un deuxième type qui concorde avec le réseau d'accès cible (étape 103) ;
contrôler une transmission du premier flux de données sur la base du paramètre QoS d'un deuxième type et du modèle de flux de données d'un deuxième type (étape 104), le contrôle de la transmission du premier flux de données sur la base du paramètre QoS d'un deuxième type et du modèle de flux de données d'un deuxième type comprenant spécifiquement les étapes consistant à :
envoyer au terminal le paramètre QoS d'un deuxième type, le modèle de flux de données d'un deuxième type et une information concernant le réseau d'accès cible ;
envoyer à un nœud d'accès du réseau d'accès cible le paramètre QoS d'un deuxième type et le modèle de flux de données d'un deuxième type,
s'il n'y a aucun réseau d'accès candidat, parmi la pluralité de réseaux d'accès candidats, qui prend en charge la première stratégie QoS, réaliser les étapes suivantes :
envoyer une indication d'échec de demande QoS au dispositif de réseau central ; recevoir une demande de mise à jour QoS, envoyée par le dispositif de réseau central, la demande de mise à jour QoS transportant une seconde stratégie QoS ;
déterminer, sur la base de la seconde stratégie QoS et de l'information concernant la pluralité de réseaux d'accès candidats, un réseau d'accès, parmi la pluralité de réseaux d'accès candidats, qui prend en charge la seconde stratégie QoS en guise de réseau d'accès cible mis à jour ;
générer un paramètre QoS d'un troisième type et un modèle de flux de données d'un troisième type, le paramètre QoS d'un troisième type et le modèle de flux de données d'un troisième type qui concorde avec le réseau d'accès cible mis à jour ;
envoyer au terminal le paramètre QoS d'un troisième type et le modèle de flux de données d'un troisième type, et
envoyer à un nœud d'accès du réseau d'accès cible mis à jour le paramètre QoS d'un troisième type et le modèle de flux de données d'un troisième type.

2. Procédé selon la revendication 1, dans lequel l'information concernant la pluralité de réseaux d'accès candidats comprend au moins une des informations suivantes :
une information concernant un réseau d'accès auquel accède actuellement un terminal, une information concernant un réseau d'accès qui est actuellement accessible par le terminal, un type d'un réseau d'accès pris en charge par le terminal, une information de stratégie de sélection de réseau d'accès préconfigurée et une information de charge d'un réseau d'accès qui est actuellement accessible par le terminal.

3. Procédé selon la revendication 1 ou 2, dans lequel la génération, sur la base du paramètre QoS d'un premier type, du paramètre QoS d'un deuxième type qui concorde avec le réseau d'accès cible comprend spécifiquement les étapes consistant à :
convertir une priorité de service comprise dans le paramètre QoS d'un premier type en une priorité de service qui concorde avec le réseau d'accès cible et convertir une information de description de service comprise dans le paramètre QoS d'un premier type en une information de description de service qui concorde avec le réseau d'accès cible,
le paramètre QoS d'un deuxième type comprenant au moins la priorité de service qui concorde avec le réseau d'accès cible et l'information de description de service qui concorde avec le réseau d'accès cible.

4. Procédé selon la revendication 1 ou 2, dans lequel la génération, sur la base du modèle de flux de données d'un premier type, du modèle de flux de données d'un deuxième type qui concorde avec le réseau d'accès cible comprend spécifiquement les étapes consistant à :
déterminer, sur la base d'un paramètre d'adresse d'un premier type et/ou d'une identité de flux de données d'un premier type qui sont compris dans le modèle de flux de données d'un premier type, un paramètre d'adresse d'un second type qui concorde avec le réseau d'accès cible et/ou une identité de flux de données d'un second type qui concorde avec le réseau d'accès cible, le modèle de flux de données d'un premier type étant un modèle de flux de données basé sur un protocole de couche 3 et/ou sur un protocole de couche 4 ; et
le modèle de flux de données d'un deuxième type comprenant au moins le paramètre d'adresse d'un second type et/ou l'identité de flux de données d'un second type ; et le modèle de flux de données d'un deuxième type étant un modèle de flux de données basé sur un protocole de couche 2 et/ou sur un protocole de couche 1.

5. Procédé selon la revendication 4, dans lequel le paramètre d'adresse d'un premier type comprend au moins une adresse source de flux de données d'un premier type et/ou une adresse de destination de flux de données d'un premier type et le paramètre d'adresse d'un second type comprend au moins une adresse source de flux de données d'un second type et/ou une adresse de destination de flux de données d'un second type ; et l'adresse source de flux de données d'un premier type et l'adresse de destination de flux de données d'un premier type étant l'une et l'autre des paramètres d'adresse basés sur le protocole de couche 3 et/ou le protocole de couche 4 ; et l'adresse source de flux de données d'un second type et l'adresse de destination de flux de données d'un second type étant l'une et l'autre des paramètres d'adresse basés sur le protocole de couche 2 et/ou le protocole de couche 1.

6. Procédé selon l'une quelconque des revendications 1 à 5, le procédé comprenant en outre, après la détermination du réseau d'accès qui est parmi la pluralité de réseaux d'accès candidats et qui prend en charge la première stratégie QoS en guise de réseau d'accès cible, l'étape consistant à :
générer une table d'association, la table d'association enregistrant une correspondance entre le premier flux de données et le réseau d'accès cible.

7. Dispositif de réseau d'accès, configuré pour réaliser l'un quelconque des procédés selon les revendications 1 à 6.
